# EUROPÄISCHE PATENTSCHRIFT

(11) **EP 2 884 067 B1**
(45) Veröffentlichungstag und Bekanntmachung des Hinweises auf die Patenterteilung: **04.04.2018**
(21) Anmeldenummer: 13196690.5
(22) Anmeldetag: 11.12.2013
(51) Int. Cl.: F01N 3/10, F01N 3/20, F01N 3/035, F01N 13/00, F01N 3/023

(54) **Verfahren zur Diagnose und Reinigung eines Gegenstandes sowie Vorrichtung hierzu**
Methods for diagnosing and cleaning an object and device for same
Procédé de diagnostic et de nettoyage d'un objet et dispositif correspondant

(43) Veröffentlichungstag der Anmeldung: 17.06.2015
(73) Patentinhaber: Hirtenberger Aktiengesellschaft, 2552 Hirtenberg (AT)
(72) Erfinder: Mayer, Hanspeter, 8643 Allerheiligen (AT)
(74) Vertreter: Wirnsberger, Gernot

(56) Entgegenhaltungen:
- EP-A1- 2 446 952
- EP-A1- 2 543 836
- WO-A1-2008/091218
- WO-A1-2011/142718
- WO-A1-2012/109691
- US-A1- 2004 103 788
- US-A1- 2009 056 288

## Beschreibung

Die Erfindung betrifft ein Verfahren zur Diagnose und Reinigung eines gasdurchlässigen Gegenstandes, welcher zur Abgasreinigung in einem Kraftfahrzeug geeignet ist, wie eines Filters oder eines Katalysators, der von einem Gas durchströmbar ist, insbesondere eines in einem Abgastrakt eines Kraftfahrzeuges eingesetzten Partikelfilters oder Katalysators, wobei zur Reinigung des Gegenstandes Druckluft durch eine Öffnung einer Einrichtung auf den Gegenstand aufgebracht wird, wobei zumindest eine Form einer Qualität des Gegenstandes mittels einer Strahlung und/oder eines Mediums gemessen wird, welche durch die Öffnung transportiert werden.

Weiter betrifft die Erfindung eine Vorrichtung zur Diagnose und Reinigung eines zur Abgasreinigung in einem Kraftfahrzeug geeigneten, gasdurchlässigen Gegenstandes wie eines Filters oder eines Katalysators, der von einem Gas durchströmbar ist, mit einer eine Öffnung aufweisenden Einrichtung und einer Regeleinrichtung, wobei mit der Regeleinrichtung ein Reinigungsmedium durch die Öffnung bewegbar ist, wobei mit der Vorrichtung zumindest eine Form einer Qualität des Gegenstandes mittels eines durch die Öffnung transportierten Mediums und/oder einer durch die Öffnung transportierten Strahlung messbar ist.

Die Dokumente WO 2011/142718 A1 und US 2004/0103788 A1 offenbaren Verfahren und Vorrichtungen zur Diagnose und Reinigung von Partikelfiltern.

Aus dem Stand der Technik sind Verfahren und Vorrichtungen zur Diagnose und zur Reinigung von Filtern und Katalysatoren bekannt geworden, welche für eine Reinigung bzw. eine Wiederaufbereitung aus einer Anlage, insbesondere einem Fahrzeug, ausgebaut werden. Dabei erfolgt üblicherweise in einem abgeschlossenen Stationsgehäuse einer Reinigungsstation eine Reinigung des Filters mit einer Reinigungseinrichtung, wonach mit einer Diagnoseeinrichtung eine oder mehrere Formen einer Qualität des Filters gemessen werden. Der Filter ist in der Regel als mit einer katalytischen Beschichtung versehener Wall-Flow-Filter ausgebildet. Nachteilig bei derartigen Verfahren bzw. den hierzu eingesetzten Vorrichtungen ist, dass eine Wiederaufbereitung des Filters einen hohen Zeitaufwand erfordert, welcher zu einem ineffizienten Verfahren führt und insbesondere bei einer industriellen Wiederaufbereitung verunreinigter Filter nicht erwünscht ist.

Aufgabe der Erfindung ist es daher, ein Verfahren der eingangs genannten Art anzugeben, mit welchem eine effizientere Diagnose und Reinigung eines Gegenstandes wie eines Filters oder eines Katalysators möglich ist.

Weiter soll eine Vorrichtung der eingangs genannten Art angegeben werden, mit welcher ein derartiges Verfahren umsetzbar ist.

Die erste Aufgabe wird erfindungsgemäß dadurch gelöst, dass bei einem Verfahren der eingangs genannten Art die Einrichtung durch einen mehrachsigen Antrieb zu verschiedenen Positionen des Gegenstandes bewegt wird, um einzelne Teilbereiche zu prüfen und/oder zu reinigen, wobei die Druckluft bei einem gepulst wechselnden Druck durch eine in der Öffnung angeordnete Düse der Einrichtung aufgebracht wird und wobei die Öffnung als Messglocke ausgebildet ist, welche die Düse um mindestens 1 mm überragt und an einem Ende eine umlaufende Dichtung aufweist.

Bei aus dem Stand der Technik bekannten Verfahren werden in der Regel einzelne Teilbereiche bzw. Kanäle des als Filter ausgebildeten Gegenstandes sequenziell mit der Reinigungseinrichtung gereinigt und nach einer Reinigung ein Reinigungserfolg im jeweiligen Teilbereich durch eine Messung einer Qualität mit einer Diagnoseeinrichtung gemessen. Nach einer Reinigung eines Teilbereiches ist daher ein Bewegen der Reinigungseinrichtung von dem gereinigten Teilbereich weg und ein Bewegen der Diagnoseeinrichtung zum gereinigten Teilbereich hin erforderlich. Diese Bewegungen erfordern einerseits entsprechende Bewegungszeiten, welche das Verfahren ineffizient machen. Andererseits kann das beschriebene Verfahren auch zu Fehlern führen, wenn die Diagnoseeinrichtung nicht exakt zu jenem Teilbereich bewegt wird, welcher gereinigt wurde, und eine gemessene Qualität eines nicht gereinigten Teilbereiches für eine Prozesssteuerung eingesetzt wird. Ein erfindungsgemäßes Verfahren ist verglichen mit diesen Verfahren des Standes der Technik effizienter, weil eine Diagnose des Gegenstandes direkt anschließend an eine Reinigung erfolgen kann, ohne den Gegenstand bzw. die Einrichtung neu zu positionieren. Da die Reinigung und Diagnose des Gegenstandes über dieselbe Öffnung erfolgen, sind auch eine gleichzeitige Reinigung und Diagnose eines Teilbereiches des Gegenstandes möglich, wodurch ein besonders effizientes Verfahren erreicht wird. Weiter ist dadurch ein rascher Wechsel von einem Diagnoseverfahren auf ein Reinigungsverfahren möglich, sodass ein mittels einer Qualität als Regelgröße geregeltes Reinigungsverfahren sehr effizient durchgeführt werden kann. Im Übrigen sind auch Fehler aufgrund einer falschen Positionierung der Diagnoseeinrichtung an einen nicht gereinigten Teilbereich ausgeschlossen.

Eine Diagnose kann auf verschiedenste Weise mittels eines durch die Öffnung ein- oder austretenden Mediums und/oder einer durch die Öffnung ein- oder austretenden Strahlung erfolgen, welche vor oder nach einem Transport durch die Öffnung in Kontakt mit dem Gegenstand gebracht werden. Beispielsweise kann eine Diagnose des Gegenstandes durch Neutronen-Mikrotomographie erfolgen. Mit diesem Verfahren ist insbesondere eine Asche aufgrund eines besonders starken Kontrastes sehr gut messbar. Weiter kann eine Eigenfrequenzanalyse des Gegenstandes durchgeführt werden, um einen strukturellen Zustand zu bestimmen. Dies kann beispielsweise durch Aufbringen von mechanischen Schwingungen durch die Öffnung und Messung der Reaktion des Gegenstandes erfolgen. Dabei kann auch eine Dämpfungscharakteristik des Gegenstandes ermittelt werden, um den strukturellen Zustand als Form der Qualität zu erfassen.

Beispielsweise kann eine durch die Öffnung in die Einrichtung transportierte Strahlung bzw. eine Strahlung, welche durch die Öffnung in die Einrichtung eintreten gelassen wird, zur Messung einer Form einer Qualität genutzt werden, insbesondere mittels einer in der Einrichtung in einer Achserstreckung über der Öffnung angeordneten Kamera, wobei für das menschliche Auge sichtbare Teile der elektromagnetischen Strahlung zur Diagnose herangezogen werden. Weiter kann durch die Öffnung auf den Gegenstand ein Prüfmedium aufgebracht und eine Reaktion des Gegenstandes hierauf gemessen werden. Eine solche Einrichtung, mit welcher durch eine einzige Öffnung sowohl ein Diagnose als auch eine Reinigung des Gegenstandes möglich ist, kann auch als integrierte Diagnose- und Reinigungseinrichtung bezeichnet werden.

Durch eine Diagnose mittels eines durch die Öffnung transportierten Mediums oder einer durch die Öffnung tretenden Strahlung ist sichergestellt, dass exakt jener Bereich diagnostiziert wird, welcher durch die Öffnung gereinigt wird oder unmittelbar zuvor gereinigt wurde. Ein Sensor zur Erfassung von qualitätsrelevanten Daten, wie ein Durchflusssensor zur Erfassung einer Durchflussmenge eines durch die Öffnung auf den Gegenstand aufgebrachten Mediums oder eine Kamera zur Erfassung sichtbaren Lichtes, welches durch den Gegenstand transportiert bzw. geleitet oder von diesem reflektiert wurde, kann vor der Öffnung in der Einrichtung oder außerhalb der Einrichtung in Transport- bzw. Strömungsrichtung vor oder hinter dem Gegenstand angeordnet sein. Als Formen der Qualität können je nach Gegenstand insbesondere ein struktureller Zustand, ein Gegendruck, ein Durchflusswiderstand, eine physikalische Funktion und eine chemische Funktion wie eine katalytische Reaktivität angesehen werden.

Üblicherweise wird eine Einrichtung mit einer in der Öffnung angeordneten Düse eingesetzt, wobei die Düse einen minimalen Durchmesser von 1 mm bis 20 mm, insbesondere etwa 2 mm bis 6 mm, aufweist. Ein Durchmesser eines in einem Nutzfahrzeug eingesetzten Filters wie eines mit einer katalytischen Beschichtung versehenen Wall-Flow-Filters beträgt zumeist etwa 300 mm. In Personenkraftwagen eingesetzte Filter weisen einen Durchmesser von etwa 100 mm bis etwa 200 mm auf, sodass durch die Öffnung mittels der Düse besonders kleine Teilbereiche des Filters gereinigt werden können. Durch das erfindungsgemäße Verfahren ist dies, vorzugsweise automatisiert, sehr effizient und innerhalb kurzer Zeit möglich. Üblicherweise wird die Düse zur mechanischen Reinigung eines Gegenstandes mit einem unter Druck stehenden Medium eingesetzt. Die Düse kann auch außerhalb der Öffnung angeordnet sein, um die Düse unabhängig von der Öffnung bewegen zu können, beispielsweise für eine gleichzeitige thermische und mechanische Reinigung.

Die Öffnung, welche als Diffusor ausgebildet sein kann, weist normalerweise einen Querschnitt auf, welcher etwa 10 % bis 20 % eines Querschnittes des Filters beträgt. Dadurch können mit der Öffnung große Teilbereiche des Querschnittes mit einem Prüf- und/oder Reinigungsmedium beaufschlagt werden. Dies ist beispielsweise bei Beaufschlagung mit einem heißen Gas günstig, um trotz geringer Strömungsgeschwindigkeiten bei einer thermischen Reinigung eine schnelle Reinigung zu erreichen.

Erfindungsgemäß wird Druckluft, vorzugsweise bei einem Druck von 2 bar bis 20 bar, insbesondere 5 bar bis 10 bar, als Reinigungsmedium eingesetzt. Üblicherweise wird die Druckluft durch eine Düse, über welche die Druckluft aufgebracht wird, in bewegte Luft mit einer entsprechend hohen Geschwindigkeit bzw. einem entsprechend hohen Impuls umgewandelt. Dabei wird ein statischer Druck der Druckluft in eine hohe Geschwindigkeit von etwa 330 m/s umgewandelt. Bei Einsatz einer Lavaldüse sind auch höhere Geschwindigkeiten möglich. Durch eine derartige mechanische Reinigung können Verunreinigungen beispielsweise in Kanälen eines Wall-Flow-Filters besonders effektiv entfernt werden. Die Druckluft wird erfindungsgemäß mit einem gepulsten Druck aufgebracht, wobei sich eine Pulsfrequenz von weniger als 200 Hz, insbesondere weniger als 10 Hz, als günstig herausgestellt hat. Gemäß der Erfindung wird Druckluft durch eine Düse aufgebracht, welche in der Öffnung angeordnet ist, um hohe Strömungsgeschwindigkeiten bzw. einen hohen Impuls zu erreichen. Dadurch wird eine effiziente Reinigung erreicht, wobei Verunreinigungen besonders gut gelöst werden können.

Alternativ oder ergänzend zu einer Reinigung mittels Druckluft hat es sich bewährt, dass ein heißes Gas als Reinigungsmedium eingesetzt wird. Dies ermöglicht ein effizientes Abbrennen von im Gegenstand befindlichem Ruß. Dabei wird das heiße Gas, mit Vorteil Luft, bei einer Temperatur von 100 °C bis 900 °C, bevorzugt 200 °C bis 700 °C, in den Gegenstand eingebracht. Es kann jedoch anstatt Luft auch ein chemisch reaktives Gas zur thermischen Reinigung eingesetzt werden, um gleichzeitig eine katalytische Reaktivität zu messen.

Alternativ oder ergänzend zu einem heißen Gas können zur Reinigung als Reinigungsmedium auch insbesondere heiße Aerosole bestehend aus zumindest einem Gas und einer oder mehreren Flüssigkeiten, trockener oder nasser Wasserdampf, Flüssigkeiten wie wässrige Lösungen auf alkalischer oder saurer Basis oder konzentrierte Lösungsmittel wie Schwefelsäure, Natronlauge oder dergleichen eingesetzt werden. Es können auch mehrere Reinigungsmedien gleichzeitig eingesetzt werden. Mit Vorteil wird das Reinigungsmedium durch eine Düse auf den Gegenstand aufgebracht, durch welche auch Druckluft aufgebracht werden kann.

Normalerweise weist die Einrichtung neben einer Zuleitung für das heiße Gas auch eine Zuleitung für ein kaltes Gas wie Druckluft auf, sodass der Gegenstand nach einer Reinigung mittels des heißen Gases durch eine Beaufschlagung mit kalter Druckluft schnell wieder gekühlt werden kann. Dadurch ist ein besonders schneller Wechsel von einem thermischen Reinigungsverfahren auf beispielsweise ein mechanisches Reinigungsverfahren möglich. Der Gegenstand wird mit heißem Gas vorzugsweise durch eine als Diffusor ausgebildete Öffnung bei einem geringen Überdruck von in der Regel etwa 0,5 bar beaufschlagt, wobei der Diffusor endseitig in der Regel eine auf den Gegenstand abgestimmte Freiformfläche aufweist. Der Überdruck von etwa 0,5 bar ergibt sich dabei aus einer Einstellung eines Volumenstromes und einem vorhandenen Durchströmungsquerschnitt des Filters. Vorzugsweise wird der Gegenstand mit einem Volumenstrom entsprechend einem Volumenstrom bei Einsatz in einem Fahrzeug beaufschlagt, um auf ein Verhalten des Gegenstandes im Fahrzeug schließen zu können.

Dabei kann auch nur ein Teilbereich gereinigt werden, welcher in der Regel mit einem entsprechenden Teil eines in einem Abgastrakt auftretenden Volumenstromes beaufschlagt wird. Für einen Gegenstand mit einem kreisförmigen Querschnitt hat sich eine Ausbildung der Öffnung als Kreissegment eines Kreises mit einem Radius entsprechend dem Radius des Gegenstandes bewährt, üblicherweise etwa 15 cm. Normalerweise beträgt ein Mittelpunktswinkel der als Kreissegment ausgebildeten Öffnung 40° bis 90°, vorzugsweise etwa 60°. Dadurch kann der Querschnitt des Gegenstandes durch ein mehrmaliges Drehen der Öffnung vollständig gereinigt werden. Wenn der Mittelpunktswinkel etwa 60° beträgt und eine Seite des Dreieckes als Kreissegment ausgebildet ist, kann der Querschnitt des Gegenstandes durch sechs Drehungen der Einrichtung um jeweils 60° vollständig abgedeckt werden, um den gesamten Querschnitt zu reinigen. Eine Düse zur Beaufschlagung des Gegenstandes mit Druckluft, wie vorstehend beschrieben, kann in der Öffnung oder als gesonderte Reinigungseinrichtung vorgesehen sein.

Bevorzugt erfolgt eine optische Diagnose des Gegenstandes durch die Öffnung mit einer in der Einrichtung angeordneten Kamera. Dies ermöglicht beispielsweise eine direkte Erfassung eines Reinigungserfolges an jenen Teilbereichen bzw. Kanälen eines Wall-Flow-Filters, die gereinigt werden, sodass eine Reinigung beispielsweise genau dann beendet werden kann, wenn trotz weiterer Reinigung kein weiterer Reinigungserfolg eintritt. Darüber hinaus können mit der Kamera auch Beschädigungen eines Substrates des als Filter aus gebildeten Gegenstandes festgestellt werden, um beispielsweise eine Reinigung eines zu stark beschädigten Filters vorzeitig zu beenden. Üblicherweise ist die Kamera bewegbar in einem vorzugsweise rohrförmigen Gehäuse der Vorrichtung entlang einer Längsachse des Gehäuses angeordnet, sodass diese auch aus der an einem Ende des Gehäuses positionierten Öffnung bewegt werden kann. Dies ermöglicht eine verbesserte Fokussierung sowie eine genaue Diagnose einzelner Kanäle. Es kann auch vorgesehen sein, dass nur eine Optik der Kamera bewegbar angeordnet ist und ein Bildsensor bzw. eine Bildauswerteeinrichtung an einem oberen Ende des Gehäuses positioniert sind, um einen verfügbaren Platz optimal zu nützen. Die bewegbare Kamera bzw. die bewegbare Optik ist in der Regel mit einem kleineren Querschnitt als die Öffnung ausgebildet, um diese leicht durch die Öffnung bewegen zu können. Es kann auch vorgesehen sein, dass die Kamera hinter einer Düse in der Öffnung angeordnet ist. Üblicherweise wird der Gegenstand auf einem lichtdurchlässigen Sockel unter der Einrichtung positioniert und von unten beleuchtet, um aussagekräftige Bilder zu erhalten. Alternativ zu einer Kamera kann auch ein Laser-Scanner vorgesehen sein, um den Gegenstand zu erfassen.

Für eine besonders genaue Diagnose des Gegenstandes hat es sich als günstig erwiesen, wenn durch die Öffnung ein vorzugsweise gasförmiges Prüfmedium aufgebracht wird. Hierzu weist die Einrichtung normalerweise eine Zuleitung für ein Reinigungsmedium und eine Zuleitung für das Prüfmedium auf, welche in ein gemeinsames, mit der Öffnung verbundenes Gehäuse münden. Durch ein Aufbringen des Prüfmediums durch die Öffnung wird gewährleistet, dass eine Diagnose jenes Teilbereiches des Gegenstandes erfolgt, welcher unmittelbar zuvor mit einem aus der Öffnung austretenden Reinigungsmedium gereinigt wurde. Üblicherweise wird das Prüfmedium durch eine endseitig als Diffusor ausgebildete Öffnung aufgebracht, sodass sich eine möglichst gleichmäßige Beaufschlagung des Gegenstandes mit dem Prüfmedium ergibt.

Es versteht sich, dass verschiedene Formen der Diagnose bzw. der Reinigung einzeln oder in Kombination durchgeführt werden können, um eine sehr genaue Diagnose bzw. einen besonders guten Reinigungserfolg zu erreichen.

Mit Vorteil wird zur Messung einer katalytischen Reaktivität ein reaktives Prüfgas definierter Zusammensetzung wie Propangas oder Kohlenmonoxid durch die Öffnung auf den Gegenstand aufgebracht und eine Konzentration von zumindest einem reduzierten oder oxidierten Bestandteil des Prüfgases nach Passieren des Gegenstandes gemessen. Dies ermöglicht eine Messung einer chemischen Funktion der katalytischen Beschichtung des Gegenstandes, sodass eine Aussage über mit dem Gegenstand erreichbare Abgasnormen getroffen werden kann. Weiter wird bei Einsatz dieses Verfahrens nach einem Wiederaufbereitungsprozess ein Risiko vermieden, dass Gegenstände wieder in ein Fahrzeug eingesetzt werden, welche eine unzureichende katalytische Reaktivität aufweisen. Alternativ oder ergänzend zur Messung eines reduzierten oder oxidierten Bestandteiles können auch eine Erhöhung einer Gastemperatur, Änderungen eines Gasdruckes oder Änderungen eines Volumenstromes gemessen werden, um die katalytische Reaktivität zu bestimmen, da bei einer katalytischen Reaktion Wärme abgegeben wird. Weiter kann auch dabei auch Ruß gemessen werden. In der Regel wird das Prüfgas bei einem geringen Druck von weniger als 1 bar, insbesondere weniger als 0,7 bar, vorzugsweise etwa 0,5 bar, durch die als Diffusor ausgebildete Öffnung aufgebracht. Ergänzend kann das Prüfgas auch durch die in der Öffnung angeordnete Düse, jedoch ebenfalls bei etwa 0,5 bar, aufgebracht werden. Üblicherweise wird ein Volumenstrom des Prüfgases geändert, bis sich ein gewünschter Gegendruck von etwa 0,5 bar einstellt.

Anstatt eines Prüfgases kann auch ein im verunreinigten Gegenstand befindlicher Ruß als Reaktionsmedium eingesetzt werden, indem der Gegenstand beispielsweise durch Einbringen von heißer Luft erwärmt wird und eine Temperatur ermittelt wird, bei welcher der Ruß zu regenerieren beginnt.

Üblicherweise wird das Prüfgas bei verschiedenen Temperaturen auf den Gegenstand aufgebracht bzw. in Kanäle des Gegenstandes eingeleitet, um eine katalytische Reaktivität des Gegenstandes bei verschiedenen Temperaturen zu bestimmen. Dadurch können eine Light-off-Kurve sowie ein 50 %-Light-off-Punkt ermittelt werden. Weiter kann auch ein sogenannter Balance-Point oder Reaktionsgleichgewichtspunkt ermittelt werden, bei welchem ein Gleichgewicht zwischen einem gebildeten Abgasbestandteil oder Ruß und einer chemischen Umwandlung zu einem Reaktionsprodukt bei bestimmten Umgebungsbedingungen, insbesondere einer bestimmten Abgastemperatur, vorliegt. Darüber hinaus kann auch ein Verhältnis einer Temperatur eines Gases bei einem Austritt aus dem Gegenstand zu einer Temperatur des Gases bei Eintritt in den Gegenstand gemessen und zur Beurteilung der katalytischen Reaktivität herangezogen werden. Als 50 %-Light-off-Punkt wird jene Temperatur bezeichnet, bei welcher 50 % der Schadstoffe im Katalysator umgewandelt werden. In der Regel liegt dieser Punkt bei neuen Katalysatoren für dieselbetriebene Kraftfahrzeuge bei etwa 240 °C. Bei gebrauchten Katalysatoren verschiebt sich dieser Punkt in Richtung höherer Temperaturen. Über eine Messung der Konversions- bzw. Umsetzungsrate über die Temperatur kann eine sogenannte Light-off-Kurve ermittelt werden, aus welcher der eine katalytische Funktion bzw. Reaktivität des Katalysators kennzeichnende 50 %-Light-off-Punkt hervorgeht. Dieser 50 %-Light-off-Punkt kann dann beispielsweise als Qualitätskriterium zur Beurteilung und Klassifikation wiederaufbereiteter Katalysatoren herangezogen werden. Eine Verschiebung des 50 %-Light-off-Punktes in Richtung niedrigerer Temperaturen ist damit ein Indikator für eine Verbesserung der katalytischen Reaktivität des Katalysators.

Anstelle einer Light-off-Kurve können auch eine Temperatur bei konstantem Gasstrom über der Zeit, eine Volumenstromvergrößerung über der Zeit in Folge der Oxidation oder Reduktion oder eine Temperaturerhöhung über der Zeit in Folge der exothermen Reaktion in einem stationären Betrieb oder in einem Balance-Point gemessen werden.

Die Reaktivität der katalytischen Beschichtung, welche ein Indiz für eine Beladung mit Platin, Palladium, Rhodium und dergleichen ist, kann auch bei verschiedenen Volumenströmen und Raumgeschwindigkeiten gemessen werden. Eine Verringerung der Raumgeschwindigkeit bis zu einem Abbruch der katalytischen Reaktivität bei konstanter Gastemperatur kann als Zusatzinformation zur Qualitätsbeurteilung herangezogen werden.

Die genannten Prüfungen bzw. Verfahren zur Diagnose eines Gegenstandes können sowohl bei neuen als auch bei gebrauchten und verunreinigten Gegenständen wie Filtern und Katalysatoren durchgeführt werden. Durch einen Vergleich von Messergebnissen desselben Gegenstandes in einem Neuzustand und einem gebrauchten Zustand kann eine Prognose der Reaktivität über eine künftige Laufzeit erstellt werden. Dadurch kann eine Standzeit des Gegenstandes abgeschätzt werden. Weiter ist dadurch eine Aussage über einen erwarteten Verbrauch eines Katalysators, und somit über eine Lebensdauer des Gegenstandes, möglich.

Vorzugsweise wird die Messung in einem Temperaturbereich von 10 °C bis 600 °C, insbesondere 200 °C bis 300 °C, und bei einem Volumenstrom zwischen 0 dm³/min und 3000 dm³/min durchgeführt. In der Regel werden Katalysatoren mit einem Durchmesser quer zu einer Längsachse von etwa 30 cm eingesetzt. Besonders bewährt hat sich eine Durchflussgeschwindigkeit des Prüfgases bei der Messung von mehr als 0 m/min bis etwa 50 m/min, um aussagekräftige Messergebnisse zu erhalten. In der Regel wird ein Volumenstrom gewählt, welcher einem Volumenstrom entspricht, mit welchem der Gegenstand bei Einsatz in einem Fahrzeug mit Abgas beaufschlagt wird. Bei einer Prüffläche mit einem Durchmesser von etwa 40 mm beträgt der Volumenstrom des Prüfgases zur Messung eines Gegendruckes des Gegenstandes üblicherweise 100 dm³/min bis 2000 dm³/min. Eine Erhöhung eines Volumenstromes des Prüfgases führt zu einem höheren Druckverlust. Gleichzeitig kann ein hoher Volumenstrom zu einem Beschädigen des Gegenstandes führen, insbesondere bei einem hohen Beladungsgrad des Gegenstandes mit Verunreinigungen. Mit Vorteil wird der Volumenstrom so gewählt bzw. solange geändert, bis sich ein Druckverlust in einem Messbereich von 0,0001 bar bis 1 bar ergibt.

Bevorzugt wird ein Prüfmedium bei einem definierten Volumenstrom auf den Gegenstand aufgebracht und ein Druckverlust über den Gegenstand gemessen. Ein Prüfen einer physikalischen Funktion des Gegenstandes bzw. eine physikalische Diagnose kann durch Messung eines Gegendruckes, eines Druckverlustes oder eines Durchflusses durch den Gegendruck bei Beaufschlagung mit einem Fluid mit definiertem Druck erfolgen. Üblicherweise wird hierzu Luft eingesetzt, wobei ein hoher Gegendruck bzw. ein geringer Durchfluss einen hohen Verunreinigungsgrad indiziert. Durch Aufbringen des Prüfmediums durch die Öffnung ist gewährleistet, dass der Druckverlust bzw. die physikalische Funktion genau jenes Teilbereiches gemessen wird, welcher unmittelbar zuvor gereinigt wurde oder während der Messung gereinigt wird. Grundsätzlich kann das Prüfmedium bei dieser physikalischen Diagnose bei jedem beliebigen Druck aufgebracht werden. Normalerweise wird jedoch ein Druck von weniger als 20 bar, insbesondere weniger als 10 bar, vorzugsweise etwa 0,5 bar, eingesetzt. Erfindungsgemäß wird die Druckluft nicht bei einem konstanten Druck, sondern bei einem gepulst wechselnden Druck aufgebracht, vorzugsweise bei einer Pulsfrequenz von 0,5 Hz bis 200 Hz, insbesondere 1 Hz bis 100 Hz. Dabei kann zur Erreichung einer besonders guten Reinigungswirkung vorgesehen sein, dass auf die Luft bei jedem Puls ein Druckstoß aufgebracht wird, welcher die Luft wie bei einem Pulsotriebwerk auf Überschallgeschwindigkeit beschleunigt.

Die Messung des Druckverlustes kann beispielsweise mittels eines in der Vorrichtung angeordneten Drucksensors erfolgen. Alternativ oder ergänzend kann auch ein Sensor vorgesehen sein, mit welchem ein Durchfluss messbar ist, um so auf einen Gegendruck des Gegenstandes zu schließen. Dabei kann auch ein Temperatursensor vorgesehen sein, um über einen Volumenstrom bzw. einen Durchfluss und eine Temperatur auf einen Massenstrom schließen zu können. Der Gegendruck kann während einer Beaufschlagung des Gegenstandes mit dem Prüfgas oder in einem gesonderten Diagnoseschritt gemessen werden, in welchem ein Gas, bevorzugt Luft, mit einem definierten Druck auf eine Stirnseite des Gegenstandes aufgebracht wird. Weiter ist mit Vorteil vorgesehen, dass im Gehäuse der Einrichtung ein Temperatursensor und/oder ein Kohlenwasserstoffsensor und/oder ein Durchflusssensor und/oder ein Staudrucksensor und/oder ein Sensor zur Erfassung eines statischen Druckes vorgesehen sind, um relevante Daten eines auf den Gegenstand durch die Öffnung aufgebrachten Mediums besonders genau zu erfassen.

Es kann auch vorgesehen sein, dass durch die Öffnung abwechselnd ein Reinigen und ein Prüfen des Gegenstandes erfolgt, wobei ein Druck eines aus der Öffnung strömenden Mediums geändert wird. Eine Reinigung und Diagnose durch dieselbe Öffnung der Einrichtung können auf einfache Weise erfolgen, wenn direkt nach bzw. vor einer Reinigung des Gegenstandes mit einem unter Druck stehenden Medium, insbesondere Druckluft wie vorstehend beschrieben, eine Durchflussmessung mit demselben Medium durchgeführt wird. Hierzu wird üblicherweise ein Druck von etwa 0,5 bar eingesetzt, sodass für einen Wechsel von einem Reinigen zu einem Prüfen lediglich ein Druck oder eine Ausströmgeschwindigkeit der aus der Öffnung ausströmenden Luft geändert werden muss. Eine höhere Austrittsgeschwindigkeit, und somit ein höherer Impuls, kann beispielsweise mittels einer Vergrößerung eines Zulaufstromes oder durch Verringerung eines Düsenquerschnittes erreicht werden. Weiter kann eine Änderung einer Ausströmgeschwindigkeit mittels einer in einer Zuleitung positionierten Drosselklappe erfolgen. Weiter kann dies einfach umgesetzt werden, indem in einer als Diffusor ausgebildeten Öffnung eine Düse angeordnet ist, sodass durch die Düse eine Beaufschlagung mit Druckluft und durch die als Diffusor ausgebildete Öffnung eine Beaufschlagung mit einem unter einem geringeren Druck stehenden Prüfmedium erfolgen kann. Um einfach zwischen der Düse und der Öffnung wechseln zu können, können ein oder mehrere Ventile vorgesehen sein. Durch ein entsprechendes Ändern des Druckes bzw. des Durchflusses können aufgrund eines instationären Druckzustandes ein Reinigen und ein Prüfen auch gleichzeitig erfolgen. Zur Erzielung eines maximalen Impulsstromes durch Erhöhung einer Austrittsgeschwindigkeit ist die Düse vorzugsweise als Überschalldüse ausgebildet.

Eine Erfassung der relevanten Messwerte wie Gegendruck, Durchfluss oder Druckverlust erfolgt in der Regel mittels Sensoren. Diese können in einer Strömungsrichtung hinter dem Gegenstand positioniert sein. Es kann jedoch auch vorgesehen sein, dass alternativ oder ergänzend entsprechende Sensoren in der Einrichtung angeordnet sind. Mit Vorteil wird der Gegenstand durch die Öffnung so lange wechselweise mit einem Prüf- und Reinigungsmedium beaufschlagt, bis ein Abbruchkriterium erreicht ist. Ein Abbruchkriterium kann ein Erreichen eines vorgegebenen Reinigungsgrades sein, ein Erkennen eines schadhaften Zustandes, sodass der Gegenstand nicht wiederaufbereitbar ist, oder ein Erkennen von unzulässigen Kontaminationen im Filter oder Katalysator.

Normalerweise erfolgt eine Wiederaufbereitung des Gegenstandes durch eine mehrere Minuten dauernde Reinigung des Gegenstandes, auf welche eine wenige Minuten oder Sekunden dauernde Phase folgt, in welcher eine Qualität des Gegenstandes gemessen wird. Diese beiden Phasen werden abwechselnd wiederholt, bis ein Abbruchkriterium erreicht ist. Zumeist wird hierzu eine Reinigung mit einem Druck von 7 bar bis 10 bar für mehrere, z. B. etwa vier Minuten, durchgeführt, wobei Druckluft durch die Düse aufgebracht wird, wonach ein Druckverlust über den Gegenstand bei einem Überdruck von 0,5 bar mittels Aufbringen eines Prüfmediums durch die Öffnung für etwa zwei Minuten gemessen wird. Basierend auf dem Messergebnis wird dann in der Regel über eine Wiederholung der beiden Phasen entschieden, bis beispielsweise keine weitere Verbesserung eines Reinigungserfolges eintritt.

Zweckmäßigerweise wird ein Gewicht des Gegenstandes während einer Reinigung gemessen. Dadurch kann auf einfache Weise durch Vergleich eines Gewichtes des verunreinigten Gegenstandes mit dem Gewicht eines neuen Gegenstandes auf eine Aschebeladung und somit eine Verunreinigung geschlossen werden. Hierzu ist der Gegenstand normalerweise auf einer Waage positioniert. Eine derartige Gewichtsmessung kann auch als redundanter Messwert in Verbindung mit einer Differenzdruckmessung zur Qualitätsbeurteilung herangezogen werden, um eine besonders genaue Aussage über einen Reinigungszustand zu erhalten. In der Regel werden beide Messwerte kontinuierlich erfasst, sodass über eine zeitliche Änderung des Reinigungszustandes auf eine voraussichtliche verbleibende Reinigungsdauer geschlossen werden kann.

Das Gewicht des Gegenstandes kann auch während einer Reinigung mit einem Reinigungsmedium wie Druckluft oder einem heißen Gas kontinuierlich gemessen werden. Weil eine sich aufgrund des Druckes, mit welchem das Reinigungsmediums auf den Gegenstand aufgebracht wird, ergebende Zusatzkraft das Messergebnis verfälschen würde, ist es günstig, wenn ein Messsignal einer Waage oder dergleichen über die Zeit statistisch aufbereitet und insbesondere geglättet wird, sodass der Messwert einfach um diese Zusatzkraft korrigiert werden kann. Dadurch ist ein unterbrechungsfreier Closed-Loop-Prozess bzw. ein geschlossener Regelkreis möglich, wobei eine Erfassung des Reinigungserfolges gleichzeitig mit der Reinigung erfolgt.

Erfindungsgemäß wird die Einrichtung durch einen mehrachsigen Antrieb zu verschiedenen Positionen des Gegenstandes bewegt, um einzelne Teilbereiche zu prüfen und/oder zu reinigen. Wie vorstehend ausgeführt, weist die Düse in der Regel einen wesentlich kleineren Querschnitt als der Gegenstand auf, sodass mit einem aus der Düse austretenden Reinigungsmedium nur kleine Teilbereiche reinigbar sind. Auch die Öffnung weist in der Regel einen kleineren Querschnitt als der Gegenstand auf. Dies ist günstig, um einzelne Teilbereiche abhängig von deren Verunreinigung bzw. einer Funktion derselben optimal reinigen zu können, bevorzugt in einem geregelten Verfahren, in welches eine gemessene Qualität bzw. eine Verunreinigung als Regelgröße eingeht. Um mit der Einrichtung den gesamten Gegenstand zu reinigen, muss die Einrichtung zu verschiedenen Positionen des Gegenstand bzw. einer Stirnseite des Gegenstandes bewegt werden. Dabei wird die Einrichtung vorzugsweise in einem automatisierten Verfahren mit einem mehrachsigen Antrieb bewegt. Mit dem Antrieb ist die Einrichtung üblicherweise in drei Richtungen translatorisch und in drei Richtungen rotatorisch bewegbar, sodass jede Position des Gegenstandes auf einfache Weise erreicht werden kann. Wenn die Öffnung wie vorstehend beschrieben einen kreissegmentförmigen Rand aufweist und ein zylindrischer Gegenstand wie ein Filter mit kreisförmigem Querschnitt eingesetzt wird, kann durch eine Rotation der Einrichtung um eine Längsachse des Filters jeder Bereich des Filters thermisch gereinigt werden. Da die Düse meist einen kleineren Querschnitt als die Öffnung aufweist, sind zur Reinigung des Gegenstandes mit einem unter Druck stehenden Medium in der Regel mehrachsige Bewegungen der Einrichtung erforderlich.

Bevorzugt wird ein struktureller Zustand des Gegenstandes durch ein Aufbringen einer definierten Kraft mit der Einrichtung und Messen einer dadurch hervorgerufenen Verformung gemessen. Dies ermöglicht es, mit der Einrichtung auch eine Festigkeit eines Dichtsitzes des Substrates in einem Canning zu vermessen, indem auf das über das Canning gelagerte Substrat eine Kraft aufgebracht und eine Verschiebung gemessen wird. In der Regel erfolgt ein Aufbringen der Kraft und eine Messung der Verformung durch den mehrachsigen Antrieb, welcher vorzugsweise kraftgesteuert bewegbar und mit einer Prozesssteuerung verbunden ist. Wenn das Substrat über das Canning auf einer Waage positioniert ist, kann über ein Messen der Reaktionskräfte ebenfalls auf eine Festigkeit des Sitzes des Substrates im Canning geschlossen werden. Weiter kann ein struktureller Zustand auch über Messung einer Aktionskraft und einer Reaktionskraft erfolgen, indem eine Hysterese der Reaktionskraft zur Aktionskraft gemessen wird. Normalerweise wird die Aktionskraft über eine Drehmomentmessung an einer Spindel gemessen, über welche die Aktionskraft aufgebracht wird. Die Reaktionskraft wird in der Regel über eine Waage gemessen, auf welcher der Gegenstand positioniert ist. Diese Hysterese bzw. Verschiebung der Reaktionskraft gegenüber der Aktionskraft kann insbesondere zur Beurteilung einer Qualität einer Fügeverbindung und eines Sitzes eines Substrates im Canning herangezogen werden.

Alternativ oder ergänzend kann auch vorgesehen sein, dass der strukturelle Zustand des Gegenstandes durch eine 3D-Geometrieerfassung ermittelt wird. Dabei können auch eine Lage eines Typenschildes und eine Position einer Beschriftung automatisiert erfasst werden. Es kann auch vorgesehen sein, dass die Beschriftung des Gegenstandes automatisiert erfasst und ausgelesen wird.

Die weitere Aufgabe wird erfindungsgemäß durch eine Vorrichtung der eingangs genannten Art gelöst, bei welcher die Einrichtung zur variablen Positionierung in der Vorrichtung mehrachsig bewegbar angeordnet und zur Aufbringung von Druckluft ausgebildet ist, wobei die Druckluft bei einem gepulst wechselnden Druck durch eine in der Öffnung angeordnete Düse der Einrichtung aufbringbar ist und wobei die Öffnung als Messglocke ausgebildet ist, welche die Düse um mindestens 1 mm überragt und an einem Ende eine umlaufende Dichtung aufweist.

Weil mit einer derartigen Vorrichtung ein zur Diagnose eingesetztes Medium bzw. eine zur Diagnose eingesetzte Strahlung und das Reinigungsmedium durch dieselbe Öffnung der Einrichtung transportiert werden, kann damit eine Qualität von genau jenem Teilbereich eines mit der Einrichtung gereinigten Gegenstandes gemessen werden bzw. genau jener Teilbereich diagnostiziert werden, welcher während der Diagnose bzw. der Qualitätsmessung gereinigt wird oder unmittelbar davor gereinigt wurde.

Dies ermöglicht einerseits ein besonders genaues Verfolgen eines Reinigungserfolges. Andererseits kann mit einer derartigen Vorrichtung auch ein besserer Reinigungserfolg erreicht werden, da Auswirkungen einer Reinigung direkt und exakt in jenem Teilbereich ermittelbar sind, welcher gereinigt wird, ohne die Einrichtung zu bewegen. Somit können auch Regelungsfehler aufgrund einer gemessenen Qualität eines vermeintlich gereinigten Teilbereiches vermieden werden, welcher tatsächlich noch nicht gereinigt wurde.

Die Regeleinrichtung umfasst normalerweise einen Kompressor, mit welchem das Prüfgas unter einem definierten Druck und/oder bei einem definierten Volumenstrom durch die Öffnung transportierbar ist. Mit Vorteil weist die Regeleinrichtung auch eine Heizeinrichtung auf, um ein Prüf- und/oder Reinigungsmedium zu erwärmen.

Üblicherweise ist die Einrichtung derart ausgebildet, dass mit der Einrichtung eine Form einer Qualität des Gegenstandes durch die Öffnung messbar ist. Hierzu können in der Einrichtung ein oder mehrere Sensoren zur Erfassung relevanter Daten eines durch die Öffnung transportierten Prüfmediums oder einer durch die Öffnung transportierten Prüfstrahlung angeordnet sein, beispielsweise ein Drucksensor oder eine Kamera. Dadurch ist eine integrierte Diagnose- und Reinigungseinrichtung gegeben.

Bevorzugt ist vorgesehen, dass die Vorrichtung, insbesondere die Einrichtung, eine Kamera zur optischen Erfassung eines vor der Öffnung positionierten Gegenstandes aufweist. Dies ermöglicht eine optische Erfassung eines Teilbereiches des Gegenstandes auch während einer Reinigung, sodass ein Reinigungserfolg in Echtzeit verfolgt und Beschädigungen frühzeitig erkannt werden können.

Es kann auch vorgesehen sein, dass die Vorrichtung, insbesondere die Einrichtung, zur Reinigung des Gegenstandes mit einem unter Druck stehenden Medium, vorzugsweise Druckluft bei Raumtemperatur, mit einer Druckluftzuleitung und einem Druckluftventil ausgebildet ist. Üblicherweise münden die Prüfgasleitung und eine für eine Zuführung einer Druckluft ausgebildete Druckluftleitung in ein gemeinsames Gehäuse der Einrichtung, von welchem aus die Druckluft und das Prüfgas durch die Öffnung aus der Einrichtung austreten können, um den Gegenstand mit dem jeweiligen Gas zu beaufschlagen. Dabei kann das Prüfgas auch während einer Reinigung des Gegenstandes mittels Druckluft aufgebracht werden, um den Gegenstand gleichzeitig zu diagnostizieren und zu reinigen. Zur Beaufschlagung des Gegenstandes mit einem unter Druck stehenden Medium ist eine Düse, insbesondere eine Lavaldüse, vorgesehen, welche in einer als Diffusor ausgebildeten Öffnung angeordnet sein kann.

Durch eine Lavaldüse kann eine Überschallgeschwindigkeit des ausströmenden Mediums erreicht werden, um eine besonders effektive Reinigung zu gewährleisten.

Mit Vorteil ist die Vorrichtung, insbesondere die Einrichtung, zur thermischen Reinigung des Gegenstandes ausgebildet. In der Regel ist hierzu durch die Vorrichtung, normalerweise durch die Einrichtung, ein heißes Gas auf einen vor der Öffnung positionierten Gegenstand aufbringbar. Dies ermöglicht ein reinigendes Abbrennen von einem im Gegenstand befindlichen Ruß. Die thermische Reinigung kann auch durch Einbringen von Wärme in den Gegenstand mittels Wärmestrahlung oder Induktion erfolgen. Günstig ist es jedoch, wenn ein heißes Gas, vorzugsweise Luft, bei einer Temperatur von 200 °C bis 900 °C auf den Gegenstand aufgebracht wird. Hierzu sind üblicherweise eine Heißgasleitung mit der Einrichtung verbunden sowie ein entsprechendes Ventil bzw. eine Heißgasregeleinrichtung vorgesehen. Durch die Heißgasleitung ist das heiße Gas dem Gehäuse zuführbar, von welchem dieses durch die bevorzugt als Diffusor ausgebildete Öffnung auf den Gegenstand aufgebracht werden kann. In der Regel weist der Querschnitt der Öffnung 5 % bis 40 %, insbesondere 10 % bis 20 % des Querschnittes des Gegenstandes auf. Dadurch sind eine gleichmäßige Beaufschlagung des Gegenstandes und eine vollständige Reinigung des Gegenstandes mit wenigen Bewegungen der Einrichtung relativ zum Gegenstand möglich. Insbesondere bei kleinen Filtern kann auch eine Einrichtung eingesetzt werden, bei welcher ein Querschnitt der Öffnung 100 % des Querschnittes des Filters oder mehr beträgt, um den Filter in einem Vollstrom mit einem Prüf- und/oder Reinigungsmedium zu beaufschlagen. Eine derartige Diagnose- und Reinigungseinrichtung erlaubt ein gleichzeitiges Messen einer Qualität und thermisches Reinigen des Gegenstandes. Dadurch kann eine thermische Reinigung beispielsweise unter Messung der katalytischen Reaktivität durchgeführt werden, bis die katalytische Reaktivität trotz anhaltender Reinigung nicht weiter verbesserbar ist. Es kann auch ein chemisch reaktives Gas zur thermischen Reinigung eingesetzt werden. Mit Vorteil ist eine Regelung vorgesehen, um Temperatur und Volumenstrom des heißen Gases zu regeln.

Zweckmäßigerweise ist ein Sensor vorgesehen, mit welchem zumindest eine Konzentration eines reduzierten oder oxidierten Bestandteiles eines in einem Katalysator bzw. in einem mit einer katalytischen Beschichtung beschichteten Gegenstand umgesetzten Prüfgases messbar ist. Dadurch kann bei Aufbringen eines reaktiven Prüfgases wie Kohlenmonoxid oder Propangas auf einen als mit einer katalytischen Beschichtung versehenen Filter ausgebildeten Gegenstand auch eine chemische Funktion des Gegenstandes gemessen werden. Ein Sensor zur Erfassung von im Gegenstand umgesetzten bzw. reduzierten oder oxidierten Gasen wie Kohlewasserstoffen oder Stickstoffdioxid ist bevorzugt an einer Stirnseite des Gegenstandes gegenüberliegend von jener Stirnseite positioniert, an welcher das Prüfgas in den Gegenstand eingebracht wird. Jedoch kann dieser Sensor auch an einer alternativen Position angeordnet sein, wenn diese alternative Position von einem Gas um- oder durchströmt wird, welches den Gegenstand passiert hat. Anstatt einer direkten Messung umgesetzter Bestandteile können selbstverständlich auch nicht umgesetzte Bestandteile des Gases gemessen werden, um unter Berücksichtigung der Zusammensetzung des Prüfgases auf eine katalytische Reaktivität des Gegenstandes zu schließen. Umgesetzte Bestandteile werden in diesem Fall indirekt ermittelt.

Eine besonders genaue Analyse des Katalysators bezüglich erreichbarer Abgasgrenzwerte bei Einsatz in einem Fahrzeug ist möglich, wenn ein einem Abgas eines Dieselmotors entsprechendes Prüfgas eingesetzt wird. Dadurch wird ein Einsatz in einem Fahrzeug simuliert. Üblicherweise wird für eine Prüfung der Funktion des Gegenstandes eine Abgasstrommenge mit einer ähnlichen Temperatur und einer ähnlichen Geschwindigkeit wie in einem Dieselmotor eingesetzt. Vorzugsweise wird eine derartige Prüfung mit einem einem Dieselmotor entsprechenden Abgas sektional durchgeführt, wobei nur ein Teilbereich des Gegenstandes mit dem Prüfgas beaufschlagt wird. Dadurch können im jeweiligen Teilbereich oder in einem gesamten Querschnitt die für einen Gegenstand wie einen Filter oder Katalysator funktionsrelevanten Luftwechselzahlen von etwa 50000 1/h bei der Prüfung erreicht werden.

Darüber hinaus kann auch ein Kohlenwasserstoffsensor vorgesehen sein, um vorhandene Rückstände von Brennstoff bzw. Motoröl zu bestimmen. Dies hat sich bewährt, um eine Reinigungsstrategie zu adaptieren, welche ohne Änderungen nicht für einen mit Motoröl verunreinigten Gegenstand anwendbar wäre, beispielsweise eine thermische Reinigung. Weiter kann aufgrund ermittelter Rückstände auf eine Beschädigung eines Fahrzeuges geschlossen werden, in welchem der Gegenstand eingebaut war.

Zweckmäßigerweise weist die Einrichtung ein Gehäuse auf, welches die Öffnung mit einer Zuleitung für ein heißes Gas sowie einer Druckluftzuleitung verbindet. Dadurch wird auf einfache Weise gewährleistet, dass verschiedene Medien der gemeinsamen Öffnung zugeführt werden, durch welche diese auf den Gegenstand aufgebracht werden. Vorzugsweise ist die Öffnung als eine an einem unteren Ende des Gehäuses angeordnete Düse ausgebildet, um eine günstige Strömung bei einem Ausströmen der verschiedenen Medien zu erreichen. Das in der Regel rohrförmige Gehäuse bildet somit im Fall einer gleichzeitigen Reinigung und Diagnose mit verschiedenen Medien eine Mischkammer, in welcher die einzelnen Medien vor einem Ausströmen aus der Düse gemischt werden. Üblicherweise sind im Gehäuse Sensoren zur Erfassung relevanter Zustände der Medien vorgesehen, wie ein Drucksensor oder ein Temperatursensor. Um eine Strömung im Gehäuse gezielt zu beeinflussen, kann eine Drallsteuerung vorgesehen sein. Neben der Zuleitung für ein heißes Gas und der Druckluftzuleitung können auch weitere Zuleitungen für Prüf- und/oder Reinigungsmedien vorgesehen sein wie eine Prüfgaszuleitung zur Einleitung eines reaktiven Gases. Die einzelnen Zuleitungen können direkt mit dem Gehäuse verbunden sein oder indirekt über eine gemeinsame Zuleitung in das Gehäuse münden. Zur Regelung einer Durchflussmenge durch die einzelnen Zuleitungen sind vorzugsweise Ventile bzw. Drosselklappen vorgesehen. Es können jedoch mit einer einzigen Druckluftzuleitung eine thermische und eine mechanische Reinigung durchgeführt werden, indem eine über die Druckluftzuleitung zugeführte Druckluft erhitzt und gegebenenfalls auf einen für eine thermische Reinigung erforderlichen Druck expandiert wird.

Mit Vorteil ist vorgesehen, dass die Vorrichtung, insbesondere die Einrichtung, einen Drucksensor umfasst, mit welchem ein Gegendruck und/oder ein Druckverlust über einen in der Vorrichtung angeordneten Gegenstand messbar sind. Der Drucksensor kann an einer stromabwärts der Öffnung liegenden Position positioniert sein, um einen Druck eines Mediums zu erfassen, welches den Gegenstand bereits passiert hat. Hierzu ist üblicherweise ein gasdurchlässiger Sockel vorgesehen, auf welchem der Gegenstand in der Vorrichtung positioniert wird. Vorzugsweise sind zwei oder mehr Sensoren vorgesehen, um über eine Druckmessung vor und nach dem Gegenstand eine Druckdifferenz über den Gegenstand bestimmen zu können. Es kann auch vorgesehen sein, dass eine Druckdifferenz zwischen einer Position vor dem Gegenstand und einer Umgebung gemessen wird. Alternativ können ein oder mehrere Volumen- oder Massenstromsensoren vorgesehen sein, mit welchen bei einer konstanten Druckdifferenz ein Volumenstrom und/oder ein Massenstrom gemessen wird, um auf einen Durchflusswiderstand zu schließen.

Alternativ oder ergänzend kann der Sensor auch im Gehäuse der Einrichtung angeordnet sein, um einen Druck des Mediums vor Austritt aus dem Gehäuse durch die Öffnung zu ermitteln.

Erfindungsgemäß ist die Einrichtung zur variablen Positionierung in der Vorrichtung mehrachsig, insbesondere kraftgesteuert, bewegbar angeordnet. Dadurch wird eine Reinigung jedes Teilbereiches des Gegenstandes möglich. Darüber hinaus kann somit eine Festigkeit des Substrates im Canning über eine Verformung auf einfache Weise gemessen werden. Die Einrichtung kann auch weggesteuert ausgebildet sein, um diese gezielt und wiederholt zu einzelnen Punkte bzw. Positionen des Gegenstand bewegen zu können.

Bevorzugt ist die Einrichtung in einem abgeschlossenen Stationsgehäuse angeordnet, wobei eine flexible Membran zur Trennung zweier Bereiche des Stationsgehäuses vorgesehen ist. Dies verhindert auf einfache Weise eine Verunreinigung einer Umgebung mit aus dem Gegenstand gelösten Verunreinigungen oder Prüf- oder Reinigungsmedien. Wenn die Einrichtung bewegbar ausgebildet in einem geschlossenen ortsfesten Gehäuse angeordnet ist, ist es günstig, wenn ein flexibles, dichtendes Element wie eine Membran, insbesondere eine Flächenmembran, derart starr und dicht mit einem bewegbaren Teil der Einrichtung und dem Gehäuse verbunden ist, dass ein Bereich bzw. ein Raum, in welchem der Gegenstand für eine Messung positioniert wird, von einem Raum hermetisch getrennt ist, in welchem ein Antrieb der Einrichtung und/oder eine Mechanik für ein Bewegen der Einrichtung angeordnet sind. Dadurch werden Beschädigungen des Antriebes bzw. der Mechanik durch Verunreinigungen bzw. Prüf- oder Reinigungsmedien auf einfache Weise verhindert. Gleichzeitig wird durch die flexible Flächenmembran eine Dichtheit trotz einer Relativbewegung der Einrichtung zur Vorrichtung gewährleistet. Alternativ oder ergänzend zu einer Membran kann auch eine Abdichtung über starr zueinander abdichtende Vorrichtungen wie Dichtringe oder dergleichen erfolgen. Üblicherweise wird ein Unterdruck in einem Raum erzeugt, in welchem der Gegenstand für eine Messung positioniert wird. Dadurch wird auf einfache Weise ein Austreten von Verunreinigungen an eine Umgebung verhindert.

Üblicherweise weist die Öffnung die Form eines Kreissegmentes auf, wobei ein Radius des Kreissegmentes einem Radius des zu reinigenden Gegenstandes entspricht, in der Regel 10 cm bis 20 cm. Alternativ kann die Öffnung auch als etwa gleichschenkeliges, insbesondere etwa gleichseitiges, Dreieck mit einer Schenkellänge von 10 cm bis 20 cm ausgebildet sein. Dies ermöglicht ein effizientes Reinigen des Gegenstandes, indem die Öffnung an einen Rand des Gegenstandes angestellt und um eine Rotationsachse des üblicherweise zylindrischen Gegenstandes gedreht wird. Beträgt ein Mittelpunktswinkel der kreissegmentförmigen Öffnung 60°, sind hierzu beispielsweise sechs Rotationen um jeweils 60° erforderlich, um den Gegenstand gänzlich zu reinigen. Die Öffnung ist erfindungsgemäß als Messglocke ausgebildet.

Bevorzugt beträgt ein Durchmesser einer Düse zur Aufbringung von Druckluft, welche in der Öffnung angeordnet ist, an einem kleinsten Querschnitt der Düse weniger als 20 mm, insbesondere 2 mm bis 10 mm. Dadurch sind einzelne Teilbereiche des Gegenstandes sehr gut und mit hohem Impuls reinigbar. Durch Einsatz einer Lavaldüse kann über eine Überschallgeschwindigkeit des aus der Düse austretenden Mediums ein besonders guter Reinigungserfolg erreicht werden. Durch die Düse können neben Druckluft auch Aerosole und weitere Reinigungsmedien aufgebracht werden, wie trockener und nasser Wasserdampf, wässrige Lösungen auf alkalischer oder saurer Basis und konzentrierte Lösungsmittel.

Eine sehr hohe Messgenauigkeit wird erfindungsgemäß dadurch erreicht, dass mit dem Gehäuse eine Messglocke verbunden ist, welche die Öffnung bildet. In der Öffnung ist die Düse zum Aufbringen von Druckluft angeordnet. Diese Düse wird von der Messglocke, welche mit Vorteil als kreissegmentförmiger Diffusor ausgebildet ist, um mindestens 1 mm überragt. Um auch den Rand des Gegenstandes zu reinigen, ist die Düse in der Regel an einem kreisbogenförmigen Rand der Öffnung positioniert.

Erfindungsgemäß weist die normalerweise konzentrisch zum Gehäuse und zur Düse angeordnete Messglocke eine umlaufende, insbesondere aus einem Elastomer bestehende Dichtung auf, sodass gewährleistet ist, dass ein aus der Öffnung austretendes Gas in Kanäle des zumeist als Wall-Flow-Filter ausgebildeten Gegenstandes eindringt.

Die Messglocke ist üblicherweise mit dem Gehäuse beispielsweise durch Spülluftöffnungen verbunden, sodass ein durch das Gehäuse transportiertes Medium durch die als Messglocke ausgebildete Öffnung austreten kann. Dadurch kann eine besonders gleichmäßige und großflächige Beaufschlagung des Gegenstandes mit dem jeweiligen Medium erreicht werden. Es kann auch vorgesehen sein, dass einzelne Prüf- oder Reinigungsmedien nur durch die Düse oder nur durch die Messglocke, jedoch nicht durch die Düse, auf den Gegenstand aufgebracht werden. Konstruktiv kann dies beispielsweise mittels eines Ventils umgesetzt sein, welches die Düse und/oder die Messglocke hydraulisch mit dem Gehäuse verbindet. Es können auch separate, Zuleitungen zur Messglocke und zur Düse vorgesehen sein, welche vorzugsweise über verschließbare Verbindungsleitungen verbindbar sind. Bevorzugt werden unter Druck stehende Medien sowie Medien, welche mit einer hohen Geschwindigkeit auf den Gegenstand aufgebracht werden wie Druckluft, ausschließlich oder zumindest überwiegend durch die in der Messglocke angeordnete Düse auf einen kleinen Teilbereich bzw. kleinen Teilquerschnitt des Gegenstandes aufgebracht. Die Messglocke kann konzentrisch, parallel oder mit einer raumschiefen Achse zur Düse angeordnet sein.

In der Regel werden ein heißes Gas, Dampf, ein Prüfgas sowie Luft mit einem geringen Volumenstrom, welcher bei Durchströmen des Gegenstandes mit dicht aufgesetzter Messglocke einen Gegendruck von etwa 0,5 bar hervorruft, zur Durchflussmessung durch die Messglocke auf einen vergleichsweise großen Querschnitt des Gegenstandes aufgebracht. Der bei der Messung durch den Volumenstrom einstellbare Gegendruck wird vorzugsweise auf eine Festigkeit eines Filterwerkstoffes abgestimmt, um Beschädigungen des Filters zu verhindern.

Dabei kann auch während des Reinigens mit einem heißen Gas oder dergleichen bei dicht aufgesetzter Messglocke eine Qualität des Gegenstandes ermittelt werden, indem ein Gegendruck des Gegenstandes gemessen und ein Volumenstrom des heißen Gases erhöht wird, bis sich ein Gegendruck von 0,001 bar bis 1 bar einstellt. Mit zunehmendem Reinigungsgrad ist zur Erreichung eines entsprechenden Gegendruckes ein höherer Volumenstrom erforderlich, sodass die Qualität durch den Volumenstrom bestimmt werden kann.

Es kann auch vorgesehen sein, dass Druckluft oder ein Prüfgas erhitzt werden. Weiter kann auch Luft mit geringem Überdruck erhitzt werden, welche mittels eines nahezu drucklosen Gebläses auf den Gegenstand aufgebracht wird.

Bei einer Messung der katalytischen Reaktivität wird die Dichtung der Messglocke auf die zu untersuchende Oberfläche, in der Regel eine Stirnseite eines Gegenstandes, gepresst, üblicherweise mit einer Kraft von 20 N bis 70 N, um eine gezielte Beaufschlagung mit dem Prüfgas zu gewährleisten. Die Kraft, mit welcher die Messglocke auf die Oberfläche gepresst wird, ist in der Regel größer als eine Kraft aufgrund eines Innendruckes in der Messglocke, mit welchem ein Medium auf die Oberfläche aufgebracht wird. Dadurch wird ein Abheben der Messglocke von der Oberfläche verhindert. Weiter ist es günstig, wenn eine zulässige maximale Pressung der Oberfläche nicht überschritten wird, um Beschädigungen des Gegenstandes, insbesondere eines Substrates, zu verhindern, sodass die Kraft, mit welcher die Messglocke auf die Oberfläche gepresst wird, auch abhängig von einer Kontaktfläche der Messglocke mit der Oberfläche ist. Bei einem Durchmesser der Messglocke von etwa 40 mm beträgt eine Kraft, mit welcher die Messglocke auf die Oberfläche gepresst wird, normalerweise etwa 20 N bis 100 N.

Während einer mechanischen Reinigung wird die Messglocke normalerweise vom Gegenstand abgehoben, sodass aus der Düse ausströmende Luft ohne statischen Druck, jedoch mit einem hohen Impuls auf die Oberfläche und in die in die Stirnseite des Gegenstandes mündenden Kanäle strömen kann. Durch ein Bewegen des Gehäuses über den Gegenstand können sämtliche Kanäle in aufeinanderfolgenden Schritten gereinigt werden bzw. können für sämtliche Kanäle eine oder mehrere Formen der Qualität ermittelt werden.

Für eine thermische Reinigung mittels eines heißen Gases liegt die Messglocke bevorzugt dicht auf der Oberfläche auf, sodass das heiße Gas mit einem geringen Gegendruck in den Gegenstand bzw. in einzelne Teilbereiche des Gegenstandes eingeleitet werden kann.

Die Messglocke kann auch mit einem Kraft- und/oder einem Bewegungssensor ausgebildet sein, um eine Geometrie des Gegenstandes zu vermessen. Hierzu kann die Messglocke auch bewegbar mit dem Gehäuse verbunden sein. Für eine Messung wird dann die Messglocke mit definierter Kraft bzw. Axialkraft auf den Gegenstand gedrückt und eine Verformung gemessen. Daraus können auf besonders einfache Weise unter anderem Durchmesser, Höhe und Position des Filters auf dem Sockel sowie Festigkeit eines Dichtsitzes bestimmt werden. Zumeist ist der Gegenstand auch auf einer Waage positioniert, mit welcher bei dieser Messung eine Reaktionskraft gemessen werden kann. Zur Bestimmung der Festigkeit des Substrates im Canning kann einerseits eine Hysteresekurve einer Reaktionskraft zur Anpress- oder Axialkraft herangezogen werden. Andererseits kann auch durch eine gemessene Kraft-Weg-Kennlinie auf eine Festigkeit des Dichtsitzes geschlossen werden.

Durch eine große Kontaktoberfläche, welche durch eine an einem Rand der Messglocke umlaufende Dichtung gebildet ist, ist auch bei einer zu Verformungen führenden Axialkraft der Messglocke auf den Gegenstand eine geringe Flächenpressung eines Substrates eines beispielsweise als Wall-Flow-Filter ausgebildeten Gegenstandes sichergestellt, sodass die Festigkeit des Dichtsitzes geprüft werden kann, ohne das Substrat zu beschädigen.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 eine Einrichtung für eine erfindungsgemäße Vorrichtung samt einem Teil eines Filters in einer Schnittdarstellung;
Fig. 2 eine erfindungsgemäße Vorrichtung mit einer Einrichtung gemäß Fig. 1;
Fig. 3 und 4 eine weitere Einrichtung für eine erfindungsgemäße Vorrichtung;
Fig. 5 ein Bewegungsmuster einer Einrichtung auf einem Filter;
Fig. 6 und 7 eine weitere Einrichtung für eine erfindungsgemäße Vorrichtung.

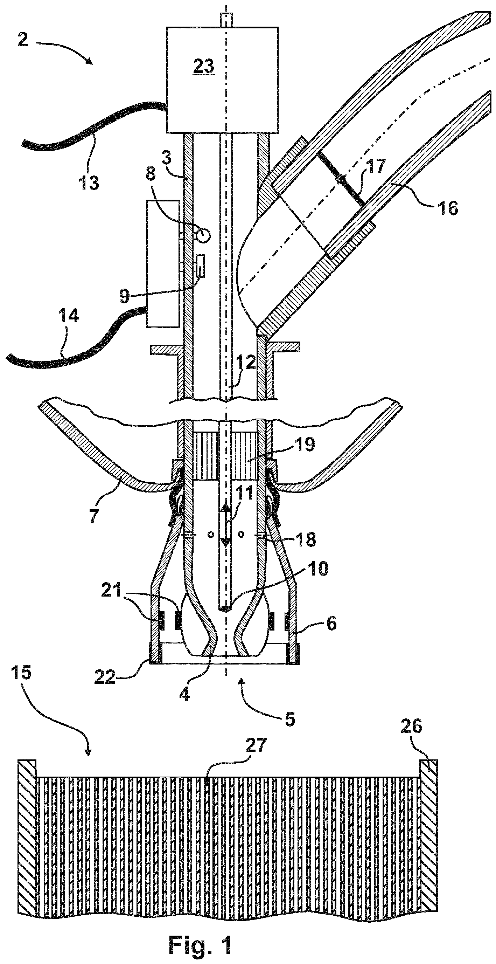

Fig. 1 zeigt schematisch eine als integrierte Diagnose- und Reinigungseinrichtung ausgebildete Einrichtung 2 für eine erfindungsgemäße Vorrichtung 1 zur Diagnose und Reinigung eines Gegenstandes sowie einen Teil eines als Wall-Flow-Filter 15 ausgebildeten Gegenstandes. Die Einrichtung 2 weist ein Gehäuse 3 auf, mit welchem eine Zuleitung 16 verbunden ist, um Prüf- und Reinigungsmedien zuzuführen, welche durch eine mit dem Gehäuse 3 verbundene Öffnung 5 auf einen Gegenstand aufgebracht werden können. Durch Spülluftöffnungen 18 und eine Düse 4 ist die Öffnung 5 dabei hydraulisch mit dem Gehäuse 3 verbunden. Die Düse 4 ermöglicht ein Aufbringen von Medien mit hoher Geschwindigkeit auf einen kleinen Teilbereich des Filters 15 und ist hier mittig in der Öffnung 5 angeordnet.

Zur Messung einer katalytischen Reaktivität des mit einer katalytischen Beschichtung beschichteten Filters 15 wird der Einrichtung 2 ein chemisch reaktives Prüfgas wie Kohlenmonoxid oder Propangas durch die Zuleitung 16 zugeführt. Um eine Menge sowie eine Temperatur des zugeführten Prüfgases insbesondere automatisch zu regeln, ist eine nicht dargestellte Regeleinrichtung vorgesehen, welche mit Sensoren der Vorrichtung 1 sowie einer Prozesssteuerung verbunden ist.

Die dargestellte Einrichtung 2 weist in der Zuführleitung ein Ventil 17 auf, mit welchem eine Menge des zugeführten Mediums regulierbar ist. Zur Beaufschlagung eines Filters 15 mit einem Prüfmedium und/oder einem Reinigungsmedium unter hohem Druck ist an einem unteren Ende des Gehäuses 3 eine Düse 4 vorgesehen, durch welche das Medium normalerweise mit einem Druck von bis zu 20 bar, vorzugsweise 0,5 bar bis 10 bar, und einer Geschwindigkeit bis zu 300 m/s austritt. Die Düse 4 weist im dargestellten Ausführungsbeispiel einen Durchmesser von etwa 6 mm auf, um eine für eine mechanische Reinigung besonders günstige Strömung zu erreichen. Mit der Einrichtung 2 werden in der Regel von aus Fahrzeugen ausgebaute Filter 15 gereinigt und diagnostiziert, welche üblicherweise einen Durchmesser von etwa 30 cm und eine Höhe von etwa 25 cm aufweisen. Eine entsprechend kleine Querschnittsfläche der Düse 4 ermöglicht daher eine gezielte Prüfung und Reinigung einzelner Teilbereiche des Filters 15 bzw. Kanäle eines Substrates 27 des Filters 15, um abhängig von einer gemessenen Qualität des Teilbereiches eine optimale Reinigung durchzuführen. Dadurch wird innerhalb kurzer Zeit ein hoher Reinheitsgrad erreicht.

Zur Reinigung wird ein Reinigungsmedium, beispielsweise Druckluft, Trockendampf oder ein heißes Gas, eingesetzt. Dieses Reinigungsmedium tritt nach einem Durchströmen des Gehäuses 3 durch die Öffnung 5 aus, sodass mit derselben Öffnung 5 ein Prüfmedium und ein Reinigungsmedium auf den Filter 15 aufgebracht werden können. Mit Vorteil sind hierzu mehrere Zuleitungen 16 vorgesehen, welche durch das Gehäuse 3 mit der Öffnung 5 verbunden sind. In der Regel sind eine Heißgasleitung und eine Druckluftleitung vorgesehen, welche entweder direkt in das Gehäuse 3 oder über eine gemeinsame Zuleitung 16 indirekt in das Gehäuse 3 münden. Weiter kann eine gesonderte Prüfgasleitung vorgesehen sein, um ein chemisch reaktives Gas zur Messung einer katalytischen Reaktivität auf den Filter 15 aufzubringen. Jedoch kann auch eine thermische Reinigung mittels des reaktiven Gases, insbesondere Propangas oder Kohlenmonoxid, erfolgen, sodass keine gesonderte Prüfgasleitung erforderlich ist.

Um in eine Strömung im Gehäuse 3 gezielt einen Drall einzubringen oder einen Drall zu reduzieren, ist eine Drallsteuerung 19 vorgesehen.

Weiter ist in einem unteren Bereich im Gehäuse 3 eine Kamera 10 bzw. eine Optik einer Kamera 10 vorgesehen, mit welcher durch die Öffnung 5 ein Bild eines unterhalb der Öffnung 5 angeordneten Filters 15 erfassbar ist. Der Filter 15 ist derart unter der Einrichtung 2 positioniert, dass eine Stirnfläche des Filters 15, in welche Kanäle münden, gegenüber der Öffnung 5 liegt. Somit kann ein mit der Einrichtung 2 untersuchter Filter 15 auch optisch durch die in der Düse 4 positionierte Kamera 10 untersucht werden, wobei ein struktureller Zustand einzelner Kanäle beurteilt werden kann.

Wie ersichtlich ist die Kamera 10 auf einer etwa zylindrischen Führung 12 konzentrisch im vorzugsweise rohrförmigen Gehäuse 3 angeordnet. Dadurch kann die Kamera 10 entlang einer Kamerabewegungsrichtung 11 axial verschoben werden. Die Kamera 10 kann somit auch durch die Düse 4 und die Öffnung 5 aus dem Gehäuse 3 bewegt werden, um beispielsweise einzelne Zellen oder Kanäle des Filters 15 besonders genau zu untersuchen. Darüber hinaus kann eine Verschiebung der Kamera 10 auch zweckmäßig sein, um eine Fokussierung zu verbessern. Eine Auswertung des mit der Kamera 10 aufgenommenen Bildes kann direkt in einer in einem oberen Bereich positionierten Bildauswerteeinrichtung 23 erfolgen. Hier kann auch ein Bildsensor angeordnet sein, in welchem ein digitales Bild entsteht. Zur Übertragung des Bildes an eine Prozesssteuerung und/oder eine Dokumentation ist beispielhaft eine Datenleitung 13 dargestellt.

Weil mit derselben Öffnung 5 eine Diagnose und eine Reinigung des Filters 15 erfolgen können, ist ein besonders rascher Wechsel von einem Diagnoseverfahren zu einem Reinigungsverfahren möglich. Mit der Einrichtung 2 ist auch eine gleichzeitige Reinigung und Diagnose eines Filters 15 möglich, wenn beispielsweise der Filter 15 mittels Druckluft mechanisch gereinigt wird, während ein sich aufgrund des Druckes einstellender Volumenstrom gemessen wird. Ein zunehmender Volumenstrom zeigt eine Verbesserung eines Reinigungsgrades an, da ein Gegendruck des Filters 15 sinkt. Zur Erfassung verschiedener Eigenschaften eines durch das Gehäuse 3 strömenden Prüf- oder Reinigungsmediums sind im Gehäuse 3 Sensoren vorgesehen. In Fig. 1 sind beispielhaft ein Temperatursensor 8 und ein Drucksensor 9 dargestellt. Darüber hinaus können auch Sensoren zur Messung eines dynamischen Druckes, einer Gaszusammensetzung, eines Volumenstromes oder dergleichen vorgesehen sein. Zur Übertragung der Messdaten an eine Prozesssteuerung oder einen Leitrechner ist eine Messleitung 14 dargestellt.

An einem unteren Bereich des Gehäuses 3 ist eine als Diffusor wirkende Messglocke 6 bewegbar angeordnet, welche die Öffnung 5 bildet und an einem unteren Ende einen Durchmesser von etwa 50 mm aufweist. Die Düse 4 ist konzentrisch in der Messglocke 6 positioniert. Wie ersichtlich überragt die Messglocke 6 die Düse 4 um vorzugsweise zumindest 1 mm und weist an einem unteren Ende eine umlaufende, in der Regel aus einem Elastomer bestehende Dichtung 22 auf, durch welche bei einem Anstellen der Einrichtung 2 an einer Stirnfläche des Filters 15 eine dichte Verbindung zwischen der Einrichtung 2 und dem Filter 15 hergestellt wird. Dadurch kann gewährleistet werden, dass ein aus der Öffnung 5 ausströmendes Medium den Filter 15 passieren muss, wodurch beispielsweise ein Gegendruck oder ein Druckverlust sehr genau gemessen werden können. Weiter wird dadurch ein direkter Kontakt der Düse 4 mit dem Substrat 27 verhindert, wodurch Beschädigungen des Substrates 27 sowie der Düse 4 vermieden werden. Ersichtlich ist, dass mehrere Spülluftöffnungen 18 vorgesehen sind, welche einen Gasaustausch zwischen dem Gehäuse 3 und der Messglocke 6 ermöglichen, um über die Messglocke 6 beispielsweise ein unter einem geringen Druck stehendes Prüfmedium aufzubringen.

Während einer Reinigung des Filters 15 mittels Druckluft wird die Messglocke 6 vorzugsweise einige Millimeter vom Filter 15 abgehoben, sodass die Druckluft lediglich mit einem hohen Impuls, jedoch ohne statischen Druck, aus der Düse 4 auf die Oberfläche und in die Kanäle strömen kann. Ein Abstand zwischen der Einrichtung 2 und dem Filter 15 ermöglicht auch eine Relativbewegung zwischen der Einrichtung 2 und dem Filter 15, wie dies bei einer Reinigung in der Regel erfolgt, um die einzelnen Teilbereiche bzw. Kanäle des Filters 15 sequenziell zu reinigen.

Bei einer thermischen Reinigung wird durch die Zuleitung 16 bzw. eine gesonderte mit dem Gehäuse 3 verbundene Heißgaszuleitung heiße Luft, vorzugsweise bei einer Temperatur von 200 °C bis 700 °C, geleitet wobei die Messglocke 6 normalerweise mit der Dichtung 22 dicht auf einer Filteroberfläche bzw. einer Stirnseite des Filters 15 anliegt. Dabei wird heiße Luft mit einem geringen Gegendruck durch einen Teil des Filters 15 geleitet. Stromabwärts des Filters 15 angeordnete Sensoren sind dann üblicherweise vorgesehen, um einen Druck, eine Temperatur und gegebenenfalls einen Grad einer Regeneration mittels eines Kohlenwasserstoffsensors 28 oder eines Kohlenmonoxidsensors zu messen.

Ein Prüf- oder Reinigungsmedium wird mit Vorteil nach einem Passieren des Filters 15 gereinigt, um eine Verunreinigung einer Umgebung zu verhindern. Dabei wird ein heißes Prüf- oder Reinigungsmedium in der Regel gekühlt, bevor dieses gereinigt wird.

Um die Einrichtung 2 zu verschiedenen Positionen bzw. Teilbereichen des Filters 15 zu bewegen, ist ein nicht dargestellter Antrieb vorgesehen, bevorzugt ein kartesischer Roboter, mit welchem die Einrichtung 2 in drei Richtungen translatorisch und in drei Richtungen rotatorisch bewegbar ist. Dadurch kann die Einrichtung 2 an jede Position des Filters 15 bewegt werden, um diese zu reinigen oder zu prüfen. Weiter kann durch eine Bewegung der Einrichtung 2 entlang des Filters 15 eine Geometrie bzw. eine Kontur des Filters 15 auch einfach vermessen werden, wobei üblicherweise Kontaktsensoren oder Kraftmesssensoren vorgesehen sind. Bei der dargestellten Ausführung ist die Messglocke 6 mit dem Gehäuse 3 derart bewegbar verbunden, dass eine seitliche Kraft auf die Messglocke 6 zu einem Schließen eines Kontaktschalters 21 führt. Dadurch sind auch Kräfte in einer horizontalen Richtung erfassbar, welche auf eine Seitenkante des Filters 15 bzw. ein das Substrat 27 überragendes Canning 26 schließen lassen. Dabei kann auch eine Position des Filters 15 in der Vorrichtung 1 genau erfasst werden.

Um eine Verunreinigung von einem oberen Teil des Stationsgehäuses 20 zu verhindern, in welchem die Bildauswerteeinrichtung 23 und normalerweise der Antrieb positioniert sind, ist eine Flächenmembran 7 vorgesehen. Die einen unteren Teil des Stationsgehäuses 20 von einem oberen Teil des Stationsgehäuses 20 hermetisch trennende Flächenmembran 7 ist mit einem bewegbaren Teil der Einrichtung 2 sowie einem dichten Stationsgehäuse 20 dicht verbunden, in welchem die Einrichtung 2 angeordnet ist. Zur Aufnahme von Relativbewegungen zwischen der Einrichtung 2 und dem Stationsgehäuse 20 ist die Flächenmembran 7 flexibel ausgebildet. Somit wird durch das Stationsgehäuse 20 eine Verunreinigung einer Umgebung durch aus dem Filter 15 gelöste Verunreinigungen sowie Prüf- oder Reinigungsmedien verhindert. Durch die Flächenmembran 7 wird eine Verunreinigung eines oberen Teiles des Stationsgehäuses 20 durch im unteren Teil befindliche Verunreinigungen und Medien verhindert. Eine Entsorgung von aus dem Filter 15 gelösten Verunreinigungen sowie Prüf- und Reinigungsmedien erfolgt durch eine Absaugung, welche mit einem unteren Teil des Stationsgehäuses 20 verbunden ist, in welchem der Filter 15 für eine Diagnose und eine Reinigung positioniert wird.

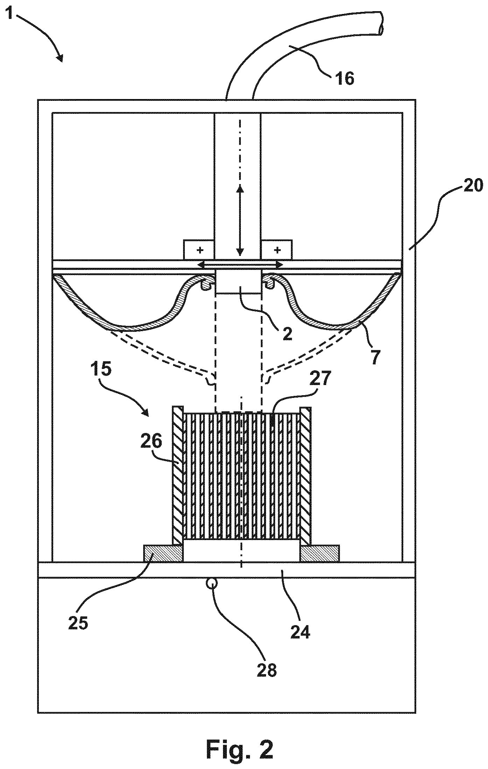

Fig. 2 zeigt eine als Diagnose- und Reinigungsstation ausgebildete erfindungsgemäße Vorrichtung 1, in welcher ein Filter 15 für eine Diagnose und eine Reinigung angeordnet ist. Weiter ist im Stationsgehäuse 20 der Vorrichtung 1 eine Einrichtung 2 wie vorstehend beschrieben mehrachsig bewegbar angeordnet. Schematisch sind zwei vertikale Positionen der Einrichtung 2 dargestellt. Wie ersichtlich ist durch die flexible Flächenmembran 7 bei jeder der abgebildeten Positionen eine Abdichtung eines oberen Teiles des Stationsgehäuses 20 gegenüber einem unteren Teil gegeben, in welchem der Filter 15 angeordnet ist.

Der Filter 15 ist über eine Waage 25 auf einem vorzugsweise licht- und gasdurchlässigen Sockel 24 positioniert, um den Filter 15 insbesondere mittels Beleuchtung von unten optisch zu analysieren und stromabwärts des Filters 15 Druck, Temperatur sowie Bestandteile eines Mediums zu messen, welches den Filter 15 passiert hat. Hierzu ist beispielhaft ein Kohlenwasserstoffsensor 28 dargestellt, mit welchem eine katalytische Reaktivität bei Einleitung eines chemisch reaktiven Prüfgases bekannter Zusammensetzung ermittelbar ist.

Wie dargestellt ist der Filter 15 derart auf der Waage 25 positioniert, dass das Substrat 27 nur indirekt über das Canning 26 auf der Waage 25 gelagert ist. Dies ermöglicht eine einfache Überprüfung einer Festigkeit einer Verbindung des Cannings 26 mit dem Substrat 27, indem ein kontrollierter Druck etwa senkrecht von oben auf das Substrat 27 ausgeübt und eine Verschiebung gemessen wird. Der Druck wird üblicherweise über die Messglocke 6 mittels eines kraftgesteuerten Antriebes aufgebracht. Eine unzureichende Festigkeit der Verbindung zwischen dem Substrat 27 und dem Canning 26 ist durch eine Verschiebung des Substrates 27 gegenüber dem Canning 26 ermittelbar, welche bei definierter Kraft über einem Grenzwert liegt. Ergänzend kann auch eine in der Waage 25 gemessene Reaktionskraft zur Beurteilung der Verbindung herangezogen werden. Durch die Waage 25 wird auch eine Aschebeladung des Filters 15 durch Vergleich eines gemessenen Gewichtes mit einem Gewicht eines neuen Filters 15 gemessen, wodurch ein Reinigungserfolg während einer Reinigung ermittelt werden kann.

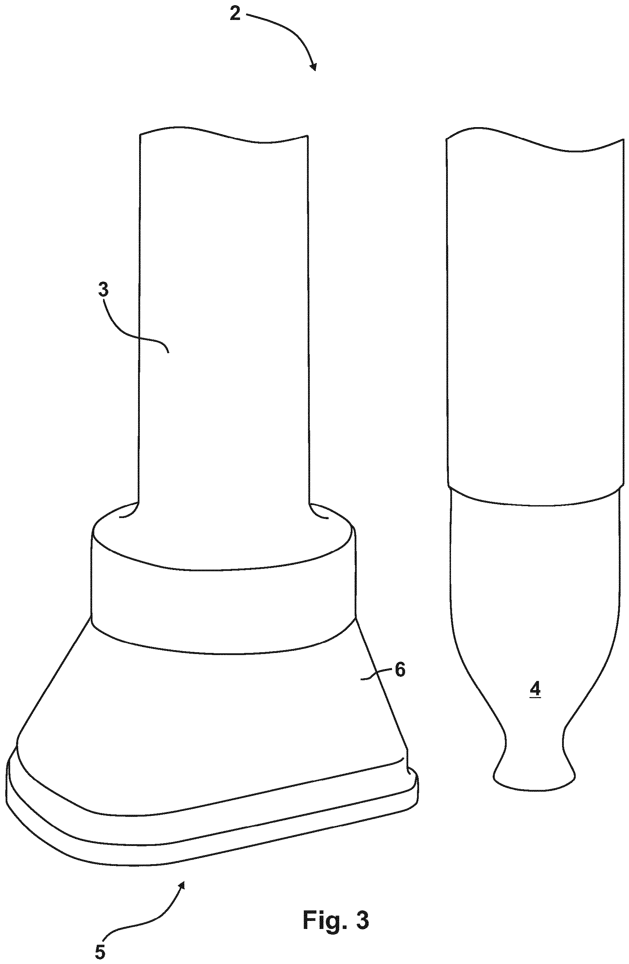

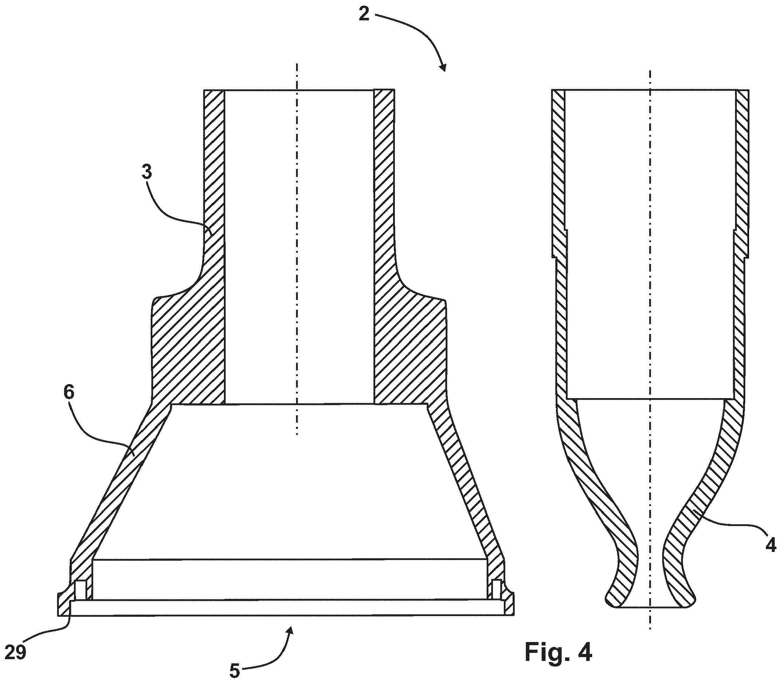

Fig. 3 und 4 zeigen eine nicht vom Schutzbereich umfasste Einrichtung 2 in einer Seitenansicht und einer Schnittdarstellung. Bei der dargestellten Ausführung ist die Düse 4 außerhalb der Öffnung 5 angeordnet. Dadurch kann ein Teilbereich des Filters 15 durch die Düse 4 mittels Druckluft gereinigt werden, während ein weiterer Teilbereich durch die Öffnung 5 mit einem heißen Gas gereinigt und/oder eine Form einer Qualität des weiteren Teilbereiches durch eine Beaufschlagung mit einem Prüfmedium durch die Öffnung 5 gemessen wird.

Die Öffnung 5 weist etwa eine Form eines Dreieckes bzw. eines Kreissegmentes eines Kreises mit einem Radius entsprechend einem Innenradius des Cannings 26 auf. Dadurch kann die Öffnung 5 bzw. der untere Rand 29 der Messglocke 6 bündig an eine Kontur des üblicherweise das Substrat 27 überragenden zylindrischen Cannings 26 angelegt werden, um das Substrat 27 vollständig zu reinigen. Eine gesamte Oberfläche des Filters 15 kann dann einfach durch ein Drehen der Einrichtung 2 oder des Filters 15 um eine Längsachse des Filters 15 durch die Öffnung 5 gereinigt und/oder diagnostiziert werden. Vorzugsweise beträgt eine Schenkellänge der dreiecksförmigen Öffnung 5 bzw. ein Radius des Kreisbogens 10 cm bis 20 cm, insbesondere etwa 15 cm, sodass Filter 15 mit einem Durchmesser von etwa 30 cm besonders gut und effizient gereinigt werden können.

Eine Herstellung der an eine Filterkontur angepassten Messglocke 6 ist mit geringen Kosten möglich, wenn die Messglocke 6 mittels 3D-Druck hergestellt wird. An einem unteren Ende der bei dieser Ausführung integral mit dem Gehäuse 3 verbundenen Messglocke 6 kann eine nicht dargestellte Dichtung 22 angeordnet sein. Dadurch wird einerseits ein unerwünschtes Umströmen des Filters 15 vermieden. Weiter wird somit eine große Auflagefläche der Messglocke 6 auf dem Filter 15 erreicht, sodass durch die Messglocke 6 große Axialkräfte zur Prüfung der Festigkeit des Substrates 27 im Canning 26 aufgebracht werden können, ohne das Substrat 27 durch eine zu große Flächenpressung zu beschädigen.

Bei der dargestellten Ausführung ist die Öffnung 5, gegebenenfalls über Ventile 17 schaltbar, mit einer Prüfgasleitung, einer Heißgasleitung sowie einer Zuleitung 16 für Druckluft bei einem Überdruck von etwa 0,5 bar verbunden. Gegebenenfalls kann auch eine Zuleitung 16 für eine Reinigung mit Dampf mit der Öffnung 5 verbunden sein. Mit der Düse 4 ist eine Druckluftleitung verbunden, um den Filter 15 mechanisch von Verunreinigungen zu reinigen. Die Düse 4 weist einen Durchmesser von minimal etwa 6 mm auf und ist normalerweise als Lavaldüse ausgebildet, um auch eine Überschallströmung zu ermöglichen.

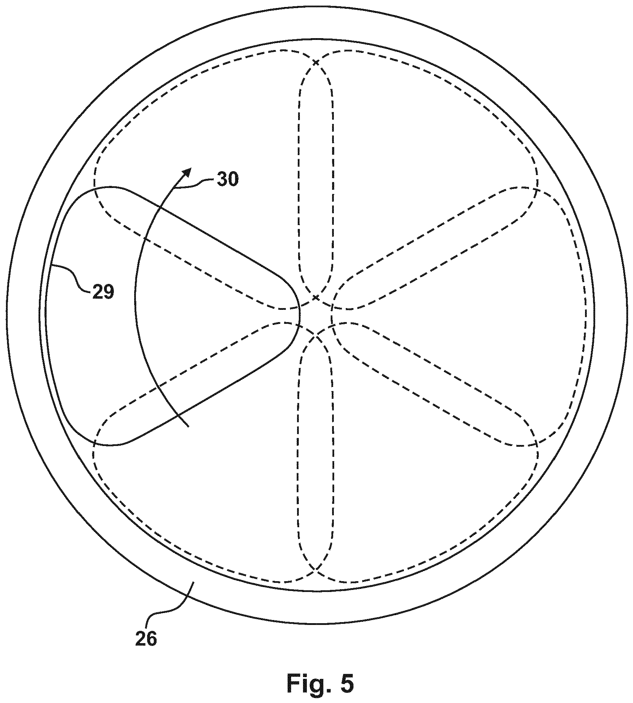

Fig. 5 zeigt ein Bewegungsmuster einer Einrichtung 2 bzw. einer Öffnung 5 der Einrichtung 2 über den Gegenstand. Ersichtlich ist, dass durch sechs Drehungen entlang einer Rotationsrichtung 30 der Einrichtung 2 um eine Längsachse des Filters 15 im Wesentlichen jeder Teilbereich des Filters 15 durch die Öffnung 5 reinigbar ist, wobei ein Rand 29 der Öffnung 5 bündig an einem Canning 26 des Filters 15 anliegt. Dadurch kann die Einrichtung 2 mit einem besonders einfach ausgebildeten Antrieb ausgeführt sein, welcher lediglich eine Drehung der Einrichtung 2 um die Längsachse des Filters 15 erlaubt. Weiter ist durch die mit Vorteil als Diffusor ausgebildete Messglocke 6, welche die Öffnung 5 bildet, ein gleichmäßiges Beaufschlagen des Filters 15 mit den Prüf- und Reinigungsmedien gewährleistet.

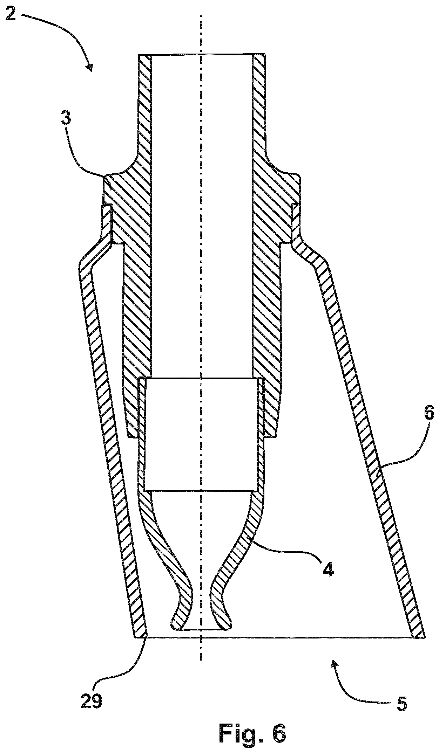

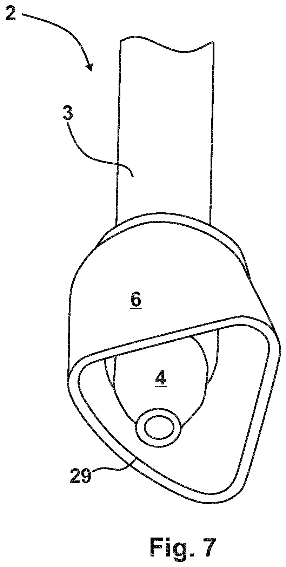

Fig. 6 und 7 zeigen eine weitere Ausführungsform einer Einrichtung 2, wobei die als Messglocke 6 ausgebildete Öffnung 5 an einem unteren Ende gemäß der in Fig. 3 und 4 dargestellten Einrichtung 2 ausgebildet ist. Jedoch ist bei dieser Einrichtung 2 die Düse 4 in der Öffnung 5 angeordnet, sodass durch dieselbe Öffnung 5 sowohl eine Reinigung des Filters 15 mittels Druckluft als auch eine thermische Reinigung und eine Messung der katalytischen Reaktivität erfolgen können. Die Düse 4 ist nicht mittig in der Messglocke 6 angeordnet, sondern nahe einem kreisbogenförmigen Teil des Randes 29 der Öffnung 5, sodass ein Randbereich des Filters 15 auch dann mit Druckluft beaufschlagt werden kann, wenn die Messglocke 6 am Filter 15 aufliegt, beispielsweise um gleichzeitig eine mechanische Reinigung und eine Durchflussmessung durchzuführen.

Um den Filter 15 mit dieser Einrichtung 2 an jedem Teilbereich mittels aus der Düse 4 austretender Druckluft zu reinigen, ist ein Bewegen der Einrichtung 2 zu jedem Teilbereich des Filters 15 erforderlich, beispielsweise mit einem kartesischen Antrieb. Auch bei dieser Ausführung können Spülluftöffnungen 18 für eine Verbindung der Messglocke 6 mit dem Gehäuse 3 vorgesehen sein, um ein vom Gehäuse 3 über die Messglocke 6 durch die Öffnung 5 transportiertes Medium gleichmäßig in der Messglocke 6 zu verteilen. Jedoch ist auch ohne Spülluftöffnungen 18 eine gleichmäßige Beaufschlagung des Filters 15 mit einem Medium gewährleistet, wenn die Messglocke 6 auf den Filter 15 gepresst wird, weil die Messglocke 6, welche die Öffnung 5 bildet, die Düse 4 um zumindest 1 mm überragt, sodass die Düse 4 vom Filter 15 beabstandet ist. Dadurch wird eine etwa homogene Verteilung des aus der Düse 4 ausströmenden Gases in der Messglocke 6 erreicht, insbesondere bei einem geringen Überdruck von 0,1 bar bis 1 bar.

Weil die Messglocke 6 die Düse 4 überragt, werden weiter ein direkter Kontakt der Düse 4 mit einem Substrat 27 und eine Beschädigung des Substrates 27 durch die Düse 4 verhindert, wenn die Messglocke 6 beispielsweise zur Prüfung eines Dichtsitzes des Substrates 27 im Canning 26 mit einer Axialkraft auf das Substrat 27 gepresst wird.

Auch bei dieser Ausführung kann in der Öffnung 5 bzw. in der Düse 4 eine Kamera 10 zur optischen Erfassung eines vor der Öffnung 5 positionierten Gegenstandes wie eines Filters 15 angeordnet sein.

Mit einem erfindungsgemäßen Verfahren sowie einer Vorrichtung 1 hierzu ist eine Messung einer katalytischen Reaktivität eines Filters 15 im ausgebauten Zustand möglich. Dadurch kann auf einfache Weise verhindert werden, dass ein wiederaufbereiteter Filter 15 mit unzureichender katalytischer Reaktivität in ein Fahrzeug eingebaut wird, welches strengen Abgasnormen genügen muss. Darüber hinaus kann eine erfindungsgemäße Vorrichtung 1 neben einer Diagnose auch zu einer Reinigung des Filters 15 eingesetzt werden, wobei durch eine Öffnung 5 sowohl ein Prüfmedium als auch ein Reinigungsmedium auf den Filter 15 aufgebracht werden können. Dies ermöglicht einen besonders raschen Wechsel von einem Diagnoseverfahren zu einem Reinigungsverfahren, wodurch ein sehr effizientes Verfahren erreicht wird, mit welchem eine Reinigung insbesondere abhängig von einer chemischen Funktion des Filters 15 oder einem Reinigungszustand einzelner Kanäle erfolgen kann.

Darüber hinaus ist eine Klassifizierung wiederaufbereiteter Filter 15 für eine weitere Verwendung basierend auf gemessenen Qualitätsdaten möglich, da eine Aussage über mit dem Filter 15 erreichbare Abgasnormen getroffen werden kann.

## Patentansprüche

1. Verfahren zur Diagnose und Reinigung eines gasdurchlässigen Gegenstandes, welcher zur Abgasreinigung in einem Kraftfahrzeug geeignet ist, wie eines Filters (15) oder eines Katalysators, der von einem Gas durchströmbar ist, insbesondere eines in einem Abgastrakt eines Kraftfahrzeuges eingesetzten Partikelfilters oder Katalysators, wobei zur Reinigung des Gegenstandes Druckluft durch eine Öffnung (5) einer Einrichtung (2) auf den Gegenstand aufgebracht wird, wobei zumindest eine Form einer Qualität des Gegenstandes mittels einer Strahlung und/oder eines Mediums gemessen wird, welche durch die Öffnung (5) transportiert werden, **dadurch gekennzeichnet, dass** die Einrichtung (2) durch einen mehrachsigen Antrieb zu verschiedenen Positionen des Gegenstandes bewegt wird, um einzelne Teilbereiche zu prüfen und/oder zu reinigen, wobei die Druckluft bei einem gepulst wechselnden Druck durch eine in der Öffnung (5) angeordnete Düse (4) der Einrichtung (2) aufgebracht wird und wobei die Öffnung (5) als Messglocke (6) ausgebildet ist, welche die Düse (4) um mindestens 1 mm überragt und an einem Ende eine umlaufende Dichtung (22) aufweist.

2. Verfahren nach Anspruch 1, **dadurch gekennzeichnet, dass** eine optische Diagnose des Gegenstandes durch die Öffnung (5) mit einer in der Einrichtung (2) angeordneten Kamera (10) erfolgt.

3. Verfahren nach Anspruch 1 oder 2, **dadurch gekennzeichnet, dass** durch die Öffnung (5) ein vorzugsweise gasförmiges Prüfmedium aufgebracht wird.

4. Verfahren nach Anspruch 3, **dadurch gekennzeichnet, dass** zur Messung einer katalytischen Reaktivität ein reaktives Prüfgas definierter Zusammensetzung wie Propangas oder Kohlenmonoxid durch die Öffnung (5) auf den Gegenstand aufgebracht und eine Konzentration von zumindest einem reduzierten oder oxidierten Bestandteil des Prüfgases nach Passieren des Gegenstandes gemessen wird.

5. Verfahren nach Anspruch 3 oder 4, **dadurch gekennzeichnet, dass** durch die Öffnung (5) abwechselnd ein Reinigen und ein Prüfen des Gegenstandes erfolgt, wobei ein Druck eines aus der Öffnung (5) strömenden Mediums geändert wird.

6. Verfahren nach einem der Ansprüche 1 bis 5, **dadurch gekennzeichnet, dass** ein Gewicht des Gegenstandes während einer Reinigung gemessen wird.

7. Verfahren nach einem der Ansprüche 1 bis 6, **dadurch gekennzeichnet, dass** ein struktureller Zustand des Gegenstandes durch ein Aufbringen einer definierten Kraft mit der Einrichtung (2) und Messen einer dadurch hervorgerufenen Verformung gemessen wird.

8. Vorrichtung (1) zur Diagnose und Reinigung eines zur Abgasreinigung in einem Kraftfahrzeug geeigneten, gasdurchlässigen Gegenstandes wie eines Filters (15) oder eines Katalysators, der von einem Gas durchströmbar ist, insbesondere zur Durchführung eines Verfahrens nach einem der Ansprüche 1 bis 7, mit einer eine Öffnung (5) aufweisenden Einrichtung (2) und einer Regeleinrichtung, wobei mit der Regeleinrichtung ein Reinigungsmedium durch die Öffnung (5) bewegbar ist, wobei mit der Vorrichtung (1) zumindest eine Form einer Qualität des Gegenstandes mittels eines durch die Öffnung (5) transportierten Mediums und/oder einer durch die Öffnung (5) transportierten Strahlung messbar ist, **dadurch gekennzeichnet, dass** die Einrichtung (2) zur variablen Positionierung in der Vorrichtung (1) mehrachsig bewegbar angeordnet und zur Aufbringung von Druckluft ausgebildet ist, wobei die Druckluft bei einem gepulst wechselnden Druck durch eine in der Öffnung (5) angeordnete Düse (4) der Einrichtung (2) aufbringbar ist und wobei die Öffnung (5) als Messglocke (6) ausgebildet ist, welche die Düse (4) um mindestens 1 mm überragt und an einem Ende eine umlaufende Dichtung (22) aufweist.

9. Vorrichtung (1) nach Anspruch 8, **dadurch gekennzeichnet, dass** mit der Einrichtung (2) eine Form einer Qualität des Gegenstandes durch die Öffnung (5) messbar ist.

10. Vorrichtung (1) nach Anspruch 8 oder 9, **dadurch gekennzeichnet, dass** die Einrichtung (2) ein Gehäuse (3) aufweist, welches die Öffnung (5) mit einer Zuleitung (16) für ein heißes Gas sowie einer Druckluftzuleitung verbindet.

11. Vorrichtung (1) nach einem der Ansprüche 8 bis 10, **dadurch gekennzeichnet, dass** die Vorrichtung (1), insbesondere die Einrichtung (2), einen Drucksensor (9) umfasst, mit welchem ein Gegendruck und/oder ein Druckverlust über einen in der Vorrichtung (1) angeordneten Gegenstand messbar sind.

12. Vorrichtung (1) nach einem der Ansprüche 8 bis 11, **dadurch gekennzeichnet, dass** die Einrichtung (2) kraftgesteuert bewegbar angeordnet ist.

13. Vorrichtung (1) nach einem der Ansprüche 8 bis 12, **dadurch gekennzeichnet, dass** die Einrichtung (2) in einem abgeschlossenen Stationsgehäuse (20) angeordnet ist, wobei eine flexible Membran zur Trennung zweier Bereiche des Stationsgehäuses (20) vorgesehen ist.

14. Vorrichtung (1) nach einem der Ansprüche 8 bis 13, **dadurch gekennzeichnet, dass** ein Sensor vorgesehen ist, mit welchem zumindest eine Konzentration eines reduzierten oder oxidierten Bestandteiles eines in einem mit einer katalytischen Beschichtung beschichteten Gegenstand umgesetzten Prüfgases messbar ist.

## Claims

1. Method for diagnosing and cleaning a gas-permeable object that is designed for cleaning exhaust gas in a motor vehicle, such as a filter (15) or a catalytic converter through which a gas is able to flow, particularly a particulate filter or catalytic converter used in an exhaust gas tract of a motor vehicle, wherein compressed air is directed at the object through an opening (5) in an apparatus (2) in order to clean the object, wherein at least one form of a quality of the object is measured by means of radiation and/or by a medium transported through the opening (5), **characterized in that** the apparatus (2) is moved to various positions of the object by a multi-axial drive unit for testing and/or cleaning individual subregions, wherein the compressed air is applied with a pressure that is changed in pulses through a nozzle (4) of the apparatus (2) arranged in the opening (5), and wherein the opening (5) is designed as a measuring bell (6) that protrudes beyond the nozzle (4) by at least 1 mm and has a peripheral seal (22) at one end thereof.

2. Method according to Claim 1, **characterized in that** an optical diagnosis of the object is carried out through the opening (5) with a camera (10) arranged in the apparatus (2).

3. Method according to Claim 1 or 2, **characterized in that** a preferably gas-phase test medium is applied through the opening (5).

4. Method according to Claim 3, **characterized in that** a reactive test gas of defined composition such as propane gas or carbon monoxide is directed at the object through the opening (5) to measure a catalytic reactivity, and a concentration of at least one reduced or oxidized component of the test gas is measured after it has passed over the object.

5. Method according to Claim 3 or 4, **characterized in that** cleaning and checking of the object is performed in alternating sequence through the opening (5), wherein a pressure of medium flowing out of the opening (5) is changed.

6. Method according to any one of Claims 1 to 5, **characterized in that** a weight of the object is measured during a cleaning.

7. Method according to any one of Claims 1 to 6, **characterized in that** a structural state of the object is measured by applying a defined force via the apparatus (2) and measuring a deformation caused thereby.

8. Device (1) for diagnosing and cleaning a gas-permeable object that is designed for cleaning exhaust gas in a motor vehicle, such as a filter (15) or a catalytic converter through which a gas is able to flow, particularly for carrying out a method according to any one of Claims 1 to 7, having an apparatus (2) with an opening (5) and a control device, wherein a cleaning medium can be moved through the opening (5) by the control device, wherein at least one form of a quality of the object can be measured with the device (1) by means of a medium transported through the opening (5) and/or radiation transported through the opening (5), **characterized in that** the apparatus (2) is arranged so as to be movable multiaxially for variable positioning in the device (1) and designed to apply compressed air, wherein the compressed air can be applied with a pressure that is changed in pulses through a nozzle (4) of the apparatus (2) arranged in the opening (5), and wherein the opening (5) is designed as a measuring bell (6) that protrudes beyond the nozzle (4) by at least 1 mm and has a peripheral seal (22) at one end thereof.

9. Device (1) according to Claim 8, **characterized in that** one form of a quality of the object is measurable through the opening (5) with the apparatus (2).

10. Device (1) according to Claim 8 or 9, **characterized in that** the apparatus (2) has a housing (3) which connects the opening (5) with a feed line (16) for a hot gas and a compressed air supply line.

11. Device (1) according to any one of Claims 8 to 10, **characterized in that** the device (1), particularly the apparatus (2), comprises a pressure sensor (9) with which a counter-pressure and/or a pressure loss over an object arranged in the device (1) can be measured.

12. Device (1) according to any one of Claims 8 to 11, **characterized in that** the apparatus (2) is arranged so as to be movable in force-controlled manner.

13. Device (1) according to any one of Claims 8 to 12, **characterized in that** the apparatus (2) is arranged in a closed station housing (20), wherein a flexible membrane is provided to separate two areas of the station housing (20).

14. Device (1) according to any one of claims 8 to 13, **characterized in that** a sensor is provided with which at least a concentration of a reduced or oxidized component of a test gas that has reacted in an object coated with a catalytic coating is measurable.

## Revendications

1. Procédé pour le diagnostic et le nettoyage d'un objet perméable aux gaz, lequel est adapté à l'épuration des gaz d'échappement dans un véhicule automobile, comme un filtre (15) ou un catalyseur, qui peut être traversé par un gaz, notamment un filtre à particules ou catalyseur introduit dans une ligne d'échappement d'un véhicule automobile, de l'air comprimé destiné à l'épuration de l'objet étant appliqué à l'objet par une ouverture (5) d'un système (2), au moins une forme d'une qualité de l'objet étant mesurée au moyen d'un rayonnement et/ou d'un milieu, lequel étant transporté à travers l'ouverture (5), **caractérisé en ce que** le système (2) est déplacé par un entraînement multiaxial à différentes positions de l'objet pour vérifier et/ou épurer des parties de zones individuelles, l'air comprimé étant appliqué à une pression variable en mode pulsé par une buse (4) du système (2) disposée dans l'ouverture (5) et l'ouverture (5) étant constituée comme une cloche de mesure (6), laquelle dépasse la buse (4) d'au moins 1 mm et comporte à une extrémité un joint d'étanchéité périphérique (22).

2. Procédé selon la revendication 1, **caractérisé en ce qu'**un diagnostic optique de l'objet a lieu à travers l'ouverture (5) avec une caméra (10) disposée dans le système (2).

3. Procédé selon la revendication 1 ou 2, **caractérisé en ce qu'**un milieu de contrôle de préférence gazeux est appliqué à travers l'ouverture (5).

4. Procédé selon la revendication 3, **caractérisé en ce que** pour mesurer une réactivité catalytique, un gaz de contrôle réactif de composition définie comme du gaz propane ou du monoxyde de carbone est appliqué à l'objet à travers l'ouverture (5) et une concentration d'au moins un constituant réduit ou oxydé du gaz de contrôle est mesurée après le passage de l'objet.

5. Procédé selon la revendication 3 ou 4, **caractérisé en ce qu'**une épuration et un contrôle de l'objet ont lieu en alternance à travers l'ouverture (5), une pression d'un milieu s'écoulant de l'ouverture (5) étant modifiée.

6. Procédé selon l'une quelconque des revendications 1 à 5, **caractérisé en ce qu'**un poids de l'objet est mesuré pendant une épuration.

7. Procédé selon l'une quelconque des revendications 1 à 6, **caractérisé en ce qu'**un état structurel de l'objet est mesuré par une application d'une force définie avec le système (2) et par la mesure d'une déformation causée de ce fait.

8. Dispositif (1) pour le diagnostic et l'épuration d'un objet perméable aux gaz adapté à l'épuration des gaz d'échappement dans un véhicule automobile, comme un filtre (15) ou un catalyseur, qui peut être traversé par un gaz, notamment pour exécuter un procédé selon l'une quelconque des revendications 1 à 7, avec un système (2) comportant une ouverture (5) et un dispositif de régulation, un milieu d'épuration pouvant être déplacé avec le dispositif de régulation à travers l'ouverture (5), avec le dispositif (1) au moins une forme d'une qualité de l'objet pouvant être mesurée au moyen d'un milieu transporté à travers l'ouverture et/ou d'un rayonnement transporté à travers l'ouverture (5), **caractérisé en ce que** le système (2) est disposé pouvant être mobile sur plusieurs axes à un positionnement variable dans le dispositif (1) et est constitué pour application d'air comprimé, l'air comprimé pouvant être appliqué à une pression variable en mode pulsé par une buse (4) du système (2), disposée dans l'ouverture (5) et l'ouverture (5) étant constitué comme cloche de mesure (6), laquelle dépasse la buse (4) d'au moins 1 mm et comporte à une extrémité un joint d'étanchéité périphérique (22).

9. Dispositif (1) selon la revendication 8, **caractérisé en ce qu'**avec le système (2) il est possible de mesurer une forme de qualité de l'objet à travers l'ouverture (5).

10. Dispositif (1) selon la revendication 8 ou 9, **caractérisé en ce que** le système (2) comporte un boîtier (3), lequel relie l'ouverture (5) à une conduite d'alimentation (16) pour un gaz chaud ainsi qu'à une conduite d'alimentation d'air comprimé.

11. Dispositif (1) selon l'une quelconque des revendications 8 à 10, **caractérisé en ce que** le dispositif (1), notamment le système (2), comprend un capteur de pression (9) avec lequel il est possible de mesurer une contre-pression et/ou une perte de pression par le biais d'un objet disposé dans le dispositif (1).

12. Dispositif (1) selon l'une quelconque des revendications 8 à 11, **caractérisé en ce que** le système (2) est disposé pouvant être déplacé par servocommande.

13. Dispositif (1) selon l'une quelconque des revendications 8 à 12, **caractérisé en ce que** le système (2) est disposé dans un boîtier de station fermé (20), une membrane souple pour la séparation des deux zones du boîtier de station (20) étant prévue.

14. Dispositif (1) selon l'une quelconque des revendications 8 à 13, **caractérisé en ce qu'**un capteur est prévu avec lequel au moins une concentration d'un constituant réduit ou oxydé d'un gaz de contrôle mis en oeuvre dans un objet revêtu d'un revêtement catalytique, peut être mesurée.
